# EUROPEAN PATENT SPECIFICATION

(11) **EP 3 182 783 B1**
(45) Date of publication and mention of the grant of the patent: **27.11.2019**
(21) Application number: 14900970.6
(22) Date of filing: 26.08.2014
(51) Int. Cl.: H04B 7/26, H04W 72/04, H04W 84/04

(54) **WIRELESS COMMUNICATIONS METHOD, DEVICE, AND SYSTEM**
DRAHTLOSKOMMUNIKATIONSVERFAHREN, -VORRICHTUNG UND -SYSTEM
PROCÉDÉ, DISPOSITIF, ET SYSTÈME DE COMMUNICATIONS SANS FIL

(43) Date of publication of application: 21.06.2017
(73) Proprietor: Huawei Technologies Co., Ltd., Longgang District Shenzhen, Guangdong 518129 (CN)
(72) Inventor: LIU, Sheng, Shenzhen Guangdong 518129 (CN)
(74) Representative: Gill Jennings & Every LLP
(86) International application number: PCT/CN2014/085211
(87) International publication number: WO 2016/029361

(56) References cited:
- WO-A1-2013/100581
- CN-A- 102 938 935
- CN-A- 103 188 797
- CN-A- 103 209 415
- US-A1- 2012 165 029
- US-A1- 2013 182 630

## Description

### TECHNICAL FIELD

The present invention relates to the field of communications technologies, and in particular, to a wireless communication method, a device, and a wireless communications system.

### BACKGROUND

With continuous development of mobile broadband, a system capacity can be increased effectively by deploying a small cell (English: Small Cell, where the small cell may include a pico cell, a micro cell, and the like, and a pico base station may be referred as a pico for short) in some hotspot areas in a macro cell (English: Macro Cell, where a macro base station may be referred to as a macro for short), that is, by using a heterogeneous network (English: Heterogeneous Network, HetNet for short), to meet a capacity requirement of a hotspot area. In the prior art, the HetNet is mainly applied to a wireless communications system using a duplex mode of time division duplex (English: Time Division Duplex, TDD for short) or frequency division duplex (English: Frequency Division Duplex, FDD for short).

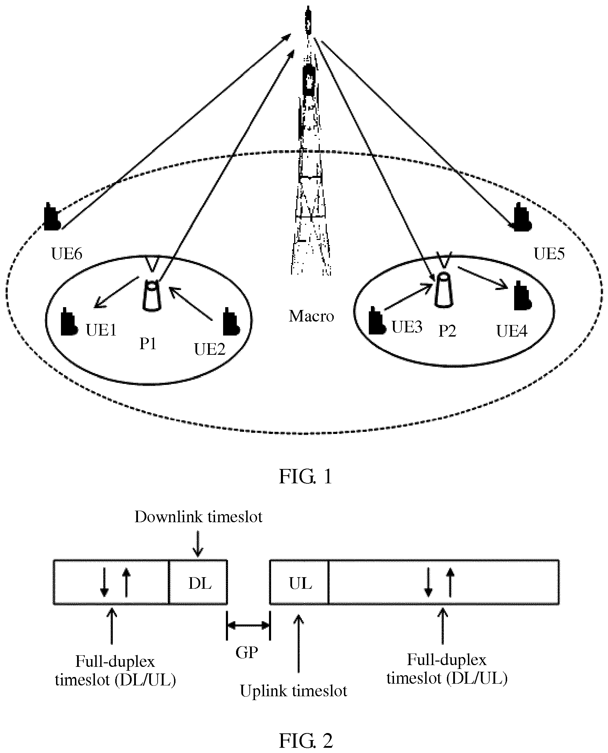

Being different from FDD and TDD technologies used in an existing wireless communications system, wireless full-duplex allows a full-duplex communications node to perform sending and reception operations simultaneously on a same radio channel. Therefore, theoretically, spectrum efficiency of the wireless full-duplex technology is twice that of the FDD or TDD technology. In a HetNet wireless communications system shown in FIG. 1, in a macro cell covered by a macro base station Macro, there are two pico base stations P1 and P2, and P1 and P2 serve as two small cells. UE1 and UE2 communicate with P1, UE3 and UE4 communicate with P2, and UE6 and UE5 communicate with the macro base station. If full-duplex communication is used for both the macro base station and the pico base station, in addition to self-interference of the macro base station and the pico base station because of full-duplex communication, signal transmission by any full-duplex communications node also interferes with signal reception by another full-duplex communications node during full-duplex communication.

WO 2013/100581 relates to a method for changing TDD uplink and downlink configuration, including: UE measures interference from the adjacent cells' UE and reports an interference condition to an eNB; the eNB changes current TDD uplink and downlink configuration according to the interference condition reported by the UE and the current uplink and downlink service requirements. By the present invention, the dynamically changed uplink and downlink service load requirements may be adapted when there is no serious interference between adjacent cells.

### SUMMARY

Embodiments of the present invention provide a wireless communication method, a device, and a wireless communications system, so as to reduce interference between communications nodes caused by signal transmission to signal reception in a full-duplex wireless communications system.

Various aspects of the present disclosure have been defined in the independent claims. Further technical features of each of these aspects have been defined in the respective dependent claims.

According to the wireless communication method, the device, and the wireless communications system provided in the foregoing embodiments, a pico base station performs full-duplex communication in a first full-duplex timeslot corresponding to an idle timeslot used by a macro base station, and the macro base station does not send or receive a signal in the idle timeslot. In addition, the macro base station and the pico base station only transmit a signal in corresponding uplink timeslots, and the macro base station and the pico base station only receive a signal in corresponding downlink timeslots. Therefore, a case in which the macro base station or the pico base station sends a signal at a same time point when the other one receives a signal is avoided, which can reduce interference between communications nodes caused by signal transmission to signal reception in a full-duplex wireless communications system.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a provided wireless communications system;
FIG. 2 is a schematic structural diagram of a radio frame for wireless communication in the prior art;
FIG. 3 is a schematic structural diagram of a radio frame for wireless communication according to an embodiment of the present invention;
FIG. 4 is a schematic flowchart of a wireless communication method according to an embodiment of the present invention;
FIG. 5 is a schematic flowchart of a wireless communication method;
FIG. 6 is a schematic flowchart of a wireless communication method according to another embodiment of the present invention;
FIG. 7 is a schematic flowchart of a wireless communication method according to yet another embodiment of the present invention;
FIG. 8 is a schematic structural diagram of a radio frame for wireless communication according to another embodiment of the present invention;
FIG. 9 is a schematic structural diagram of a radio frame for wireless communication;
FIG. 10 is a schematic structural diagram of a radio frame for wireless communication;
FIG. 11 is a schematic structural diagram of a radio frame for wireless communication;
FIG. 12 is a schematic structural diagram of a macro base station according to an embodiment of the present invention;
FIG. 13 is a schematic structural diagram of a pico base station according to an embodiment of the present invention;
FIG. 14 is a schematic structural diagram of user equipment served by a macro base station according to an embodiment of the present invention;
FIG. 14a is another schematic structural diagram of user equipment served by a macro base station according to an embodiment of the present invention;
FIG. 15 is a schematic structural diagram of user equipment served by a pico base station according to an embodiment of the present invention;
FIG. 16 is a schematic structural diagram of a macro base station;
FIG. 17 is a schematic structural diagram of a pico base station
FIG. 18 is a schematic structural diagram of user equipment served by a macro base station; and
FIG. 19 is a schematic structural diagram of user equipment served by a pico base station.

### DESCRIPTION OF EMBODIMENTS

Multiple embodiments are described with reference to the accompanying drawings, and same components in this specification are indicated by a same reference numeral. In the following description, for ease of explanation, many specific details are provided to facilitate comprehensive understanding of one or more embodiments. However, apparently, the embodiments may be implemented not by using these specific details. In other examples, well-known structures and devices are shown in a form of block diagrams, to conveniently describe one or more embodiments.

User equipment (UE for short, English: User Equipment) provided in the embodiments of the present invention may be a cellular phone, a cordless phone, a Session Initiation Protocol (English: Session Initiation Protocol, SIP for short) phone, a wireless local loop (English: Wireless Local Loop, WLL for short) station, a personal digital assistant (English: Personal Digital Assistant, PDA for short), a handheld device having a wireless communication function, an in-vehicle device, a wearable device, a computing device, or another processing device connected to a wireless modem.

A base station provided in the embodiments of the present invention may be configured to communicate with user equipment. The base station may be an access device such as a wireless access point (English: Access point, AP for short) of Wireless Fidelity (English: Wireless-Fidelity, WiFi for short) or a base transceiver station (English: Base Transceiver Station, BTS for short) in Global System for Mobile Communications (English: Global System for Mobile communications, GSM for short) or Code Division Multiple Access (English: Code Division Multiple Access, CDMA for short), or may be a NodeB (English: NodeB, NB for short) in Wideband Code Division Multiple Access (English: Wideband Code Division Multiple Access, WCDMA for short), or may be an evolved NodeB (English: Evolved Node B, eNB or eNodeB for short) in Long Term Evolution (English: Long Term Evolution, LTE for short), a relay station or an access point, an access device in a future 5G network, and the like. In addition, the base station includes at least two types of base stations used for constructing a heterogeneous network: a macro base station and a pico base station, and a macro cell corresponding to the macro base station may include a small cell corresponding to the pico base station.

It should be noted that in the embodiments of the present invention, "uplink" may refer to a signal transmission direction of signal reception by a wireless access device or a signal transmission direction of signal sending by user equipment, and "downlink" may refer to a signal transmission direction of signal sending by a wireless access device or a signal transmission direction of signal reception by user equipment. This is used as a standard unless otherwise noted. Certainly, other variations or replacements on this basis shall fall within the protection scope of the present invention. In addition, on an air interface in a wireless cellular system, a radio signal is generally divided in terms of time according to a time segment of a specific length, that is, divided according to a radio frame (English: Radio Frame). One radio frame is divided into multiple timeslots; or one radio frame is divided into multiple subframes, and one subframe is further divided into multiple timeslots. For example, in an LTE-TDD system, one radio frame of a length of 10 ms includes ten subframes of a length of 1 ms, and each subframe is further divided into two timeslots. In the embodiments of the present invention, one full-duplex timeslot is corresponding to one subframe or timeslot in a radio frame. When one radio frame includes multiple full-duplex timeslots, the multiple full-duplex timeslots are corresponding to multiple consecutive or inconsecutive subframes or timeslots in the radio frame. The same is true of an uplink timeslot and a downlink timeslot in the embodiments of the present invention.

The embodiments of the present invention may be specifically applied to a HetNet wireless communications system shown in FIG. 1. In a macro cell covered by a macro base station Macro, there are two pico base stations P1 and P2, and P1 and P2 serve as two small cells. UE1 and UE2 communicate with P1, UE3 and UE4 communicate with P2, and UE6 and UE5 communicate with the macro base station. Both the macro base station and the pico base station use a radio frame structure shown in FIG. 2, to perform data communication. FIG. 2 includes a full-duplex timeslot used for a downlink/an uplink (English: Down Link/Up Link, DL/UL for short), a downlink timeslot used for the DL, a guard period (English: Guard Period, GP for short), an uplink timeslot used for the UL, and a full-duplex timeslot used for the DL/UL. In a wireless communications system using a pair of carriers or multiple carriers, the radio frame structure shown in FIG. 2 may be used for some or all of the carriers.

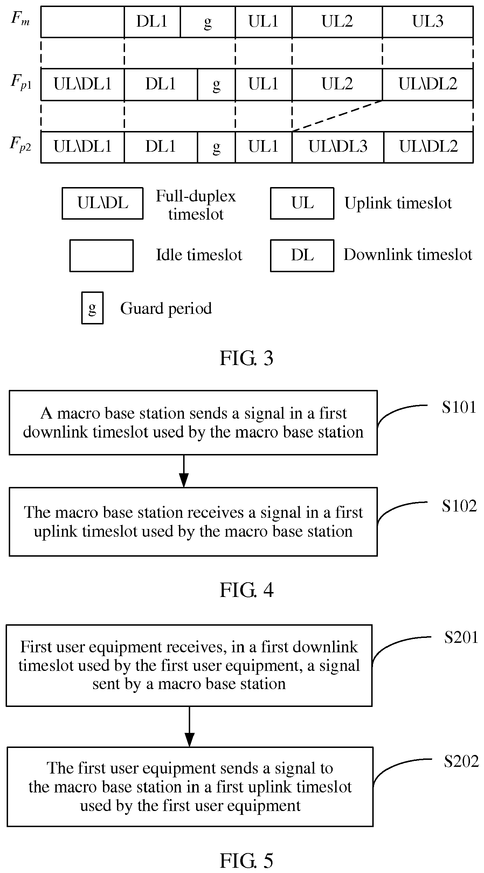

FIG. 3 provides a schematic diagram of a frame timing relationship of a macro base station and two pico base stations. *Fₘ* is a radio frame structure used when a macro base station Macro communicates with user equipment served by the macro base station, *F*_{*p*1} is a radio frame structure used when a pico base station P1 communicates with user equipment served by the pico base station P1, and *F*_{*p*2} is a radio frame structure used when a pico base station P2 communicates with user equipment served by the pico base station P2, where a path loss between the pico base station P1 and the macro base station Macro is less than or equal to a first threshold, and a path loss between the pico base station P2 and the macro base station Macro is greater than the first threshold. That the path loss between the pico base station and the macro base station is less than or equal to the first threshold may mean that the pico base station is relatively close to the macro base station, and that the path loss between the pico base station and the macro base station is greater than the first threshold may mean that the pico base station is relatively far away from the macro base station site. A distance is merely used as an example for a reference standard for a magnitude of the path loss between the macro base station and the micro base station for description herein. Certainly, an obstruction (such as a building, a wall, or a manually mounted electromagnetic shielding and absorption device) disposed between the macro base station and the pico base station also affects the path loss between the macro base station and the pico base station. For example, a path loss between a macro base station and a pico base station that are disposed in a suburban area is less than a path loss between a macro base station and a pico base station that are disposed at a same distance in an urban area with dense buildings. Specifically, both the macro base station and the pico base station may measure a specific path loss according to received signal power, which is not described herein. As shown in FIG. 3, a starting point and an ending point of an idle timeslot in *Fₘ* are aligned with those of a first full-duplex timeslot UL/DL1 in each of *F*_{*p*1} and *F*_{*p*2}*,* a starting point of a first downlink timeslot DL1 in *Fₘ* is aligned with that of a first downlink timeslot DL1 in each of *F*_{*p*1} and *F*_{*p*2}*,* a starting point and an ending point of a first uplink timeslot UL1 in *Fₘ* are aligned with those of a first uplink timeslot UL1 in each of *F*_{*p*1} and *F*_{*p*2}*,* a starting point and an ending point of a second uplink timeslot UL2 in *Fₘ* are aligned with those of a second uplink timeslot UL2 in *F*_{*p*1}, a starting point and an ending point of a third uplink timeslot UL3 in *Fₘ* are aligned with those of a second full-duplex timeslot UL/DL2 in *F*_{*p*1}, the starting point and the ending point of the second uplink timeslot UL2 in *Fₘ* are aligned with those of a third full-duplex timeslot UL/DL3 in *F*_{*p*2}*,* and the starting point and the ending point of the third uplink timeslot UL3 in *Fₘ* are aligned with those of a second full-duplex timeslot UL/DL2 in *F*_{*p*2}. Optionally, a guard period g is set between the first downlink timeslot DL1 and the first uplink timeslot UL1 in each of *Fₘ, F*_{*p*1}, and *F*_{*p*2}. In addition, the guard period GP (Guard Period, guard period) (that is, a timeslot g in FIG. 3) that is set between the first downlink timeslot DL1 and the first uplink timeslot UL1 in each of *Fₘ*, *F*_{*p*1}, and *F*_{*p*2} is used to avoid interference caused when a signal transmitted by a base station of a neighboring cell in a downlink timeslot undergoes a relatively long propagation delay, and is received by a base station of this cell in an uplink timeslot of this cell. The guard periods GPs that are set between the first downlink timeslots DL1 and the first uplink timeslots UL1 in *Fₘ*, *F*_{*p*1}*,* and *F*_{*p*2} may be the same or different. In FIG. 3, lengths of the guard periods GPs that are set between the first downlink timeslots DL1 and the first uplink timeslots UL1 in *Fₘ, F*_{*p*1}, and *F*_{*p*2} are different. Because a coverage area of the macro base station is larger, a signal transmitted by the macro base station undergoes a longer propagation delay than that transmitted by the pico base station. Therefore, the GP used by the macro base station is longer. Because a coverage area of the pico base station is smaller, the GP used by the pico base station is shorter. Therefore, the first downlink timeslot DL1 used by the pico base station may be slightly longer than the first downlink timeslot DL1 used by the macro base station. Certainly, there may be no guard period GP set between the first downlink timeslot DL1 and the first uplink timeslot UL1 in each of *Fₘ, F*_{*p*1}*,* and *F*_{*p*2}. In this case, ending points of the first downlink timeslots DL1 in *Fₘ, F*_{*p*1}, and *F*_{*p*2} are also aligned. FIG. 3 shows merely a case in which the guard period GP is set between the first downlink timeslot DL1 and the first uplink timeslot UL1 in each of *Fₘ, F*_{*p*1}, and *F*_{*p*2}. It may be understood that this is not a limitation to the present invention, and another implementation manner described above shall also fall within the protection scope of the present invention.

Based on the foregoing radio frame structure shown in FIG. 3, an embodiment of the present invention provides a method for wireless communication between a macro base station and user equipment. The wireless communication method is applied to a wireless communications system in which a macro cell corresponding to a macro base station includes a small cell corresponding to a pico base station. The macro base station and the pico base station use a same carrier to respectively communicate with user equipment served by the macro base station and user equipment served by the pico base station. Referring to FIG. 4, the macro base station executes the following steps:
S101. The macro base station sends a signal in a first downlink timeslot used by the macro base station.
S102. The macro base station receives a signal in a first uplink timeslot used by the macro base station.

A starting point and an ending point of an idle timeslot used by the macro base station are aligned with those of a first full-duplex timeslot UL/DL1 used by the pico base station, a starting point of the first downlink timeslot DL1 used by the macro base station is aligned with that of a first downlink timeslot DL1 used by the pico base station, and a starting point and an ending point of the first uplink timeslot UL1 used by the macro base station are aligned with those of a first uplink timeslot UL1 used by the pico base station.

In the foregoing embodiment, a macro base station does not send or receive a signal in an idle timeslot used by the macro base station, and a pico base station performs full-duplex communication in a first full-duplex timeslot corresponding to the idle timeslot used by the macro base station. In addition, a starting point and an ending point of a first uplink timeslot UL1 used by the macro base station are aligned with those of a first uplink timeslot UL1 used by the pico base station, and a starting point of a first downlink timeslot DL1 used by the macro base station is aligned with that of a first downlink timeslot DL1 used by the pico base station. Therefore, the macro base station or the pico base station does not send a signal at a same time point when the other one receives a signal. Therefore, signal sending by the pico base station does not cause interference to signal reception by the macro base station, nor does signal sending by the macro base station cause interference to signal reception by the pico base station.

Referring to FIG. 5, another embodiment of the present invention provides a wireless communication method, and the method is applied to a wireless communications system in which a macro cell corresponding to a macro base station includes a small cell corresponding to a pico base station. The macro base station and the pico base station use a same carrier to respectively communicate with user equipment served by the macro base station and user equipment served by the pico base station. First user equipment served by the macro base station specifically executes the following steps:
S201. The first user equipment receives, in a first downlink timeslot used by the first user equipment, a signal sent by the macro base station.
S202. The first user equipment sends a signal to the macro base station in a first uplink timeslot used by the first user equipment.

A starting point and an ending point of an idle timeslot used by the first user equipment are aligned with those of a first full-duplex timeslot UL/DL1 used by the pico base station, a starting point of the first downlink timeslot DL1 used by the first user equipment is aligned with that of a first downlink timeslot DL1 used by the pico base station, and a starting point and an ending point of the first uplink timeslot UL1 used by the first user equipment are aligned with those of a first uplink timeslot UL1 used by the pico base station.

In the foregoing embodiment, first user equipment does not perform signal transmission with a macro base station in an idle timeslot used by the first user equipment, and a pico base station performs full-duplex communication in a first full-duplex timeslot corresponding to the idle timeslot used by the first user equipment. In addition, a starting point and an ending point of a first uplink timeslot UL1 used by the first user equipment are aligned with those of a first uplink timeslot UL1 used by the pico base station, and a starting point of a first downlink timeslot DL1 used by the first user equipment is aligned with that of a first downlink timeslot DL1 used by the pico base station. Therefore, the first user equipment and the pico base station do not simultaneously send a signal or simultaneously receive a signal at a same time point. Therefore, signal sending by the pico base station does not cause interference to signal reception by the macro base station from the first user equipment, nor is signal reception by the pico base station interfered by a signal sent by the macro base station to a first user equipment.

Further, the first user equipment performs one or more of signal sending or signal reception in a device-to-device D2D communication manner in the idle timeslot used by the first user equipment.

Herein, the macro base station does not use an idle timeslot to perform signal transmission, but the first user equipment performs signal transmission in a device-to-device D2D communication manner in the idle timeslot used by the first user equipment. Therefore, carrier spectrum utilization is improved.

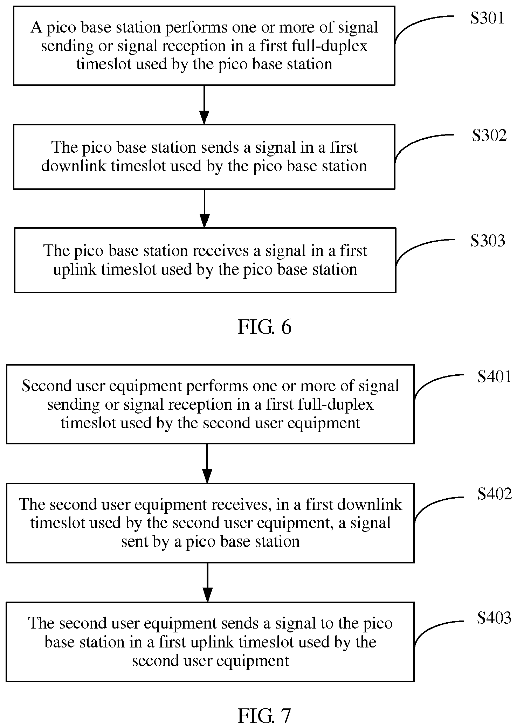

In addition, based on the foregoing radio frame structure shown in FIG. 3, an embodiment of the present invention provides a method for wireless communication between a pico base station and user equipment, and the method is applied to a wireless communications system in which a macro cell corresponding to a macro base station includes a small cell corresponding to a pico base station. The macro base station and the pico base station use a same carrier to respectively communicate with user equipment served by the macro base station and user equipment served by the pico base station. Referring to FIG. 6, the pico base station executes the following steps:
S301. The pico base station performs one or more of signal sending or signal reception in a first full-duplex timeslot used by the pico base station.
S302. The pico base station sends a signal in a first downlink timeslot used by the pico base station.
S303. The pico base station receives a signal in a first uplink timeslot used by the pico base station.

A starting point and an ending point of an idle timeslot used by the macro base station are aligned with those of the first full-duplex timeslot UL/DL1 used by the pico base station, a starting point of a first downlink timeslot DL1 used by the macro base station is aligned with that of the first downlink timeslot DL1 used by the pico base station, and a starting point and an ending point of a first uplink timeslot UL1 used by the macro base station are aligned with those of the first uplink timeslot UL1 used by the pico base station.

In the foregoing embodiment, a pico base station performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the pico base station are aligned with those of a first uplink timeslot UL1 used by the macro base station, and a starting point of a first downlink timeslot DL1 used by the pico base station is aligned with that of a first downlink timeslot DL1 used by the macro base station. Therefore, one of the pico base station or the macro base station does not send a signal at a same time point when the other one receives a signal. Therefore, signal sending by the pico base station does not cause interference to signal reception by the macro base station, nor does signal sending by the macro base station cause interference to signal reception by the pico base station.

Referring to FIG. 7, an embodiment of the present invention provides a method for wireless communication between a pico base station and user equipment, and the method is applied to a wireless communications system in which a macro cell corresponding to a macro base station includes a small cell corresponding to a pico base station. The macro base station and the pico base station use a same carrier to respectively communicate with user equipment served by the macro base station and user equipment served by the pico base station. Second user equipment served by the pico base station specifically executes the following steps:
S401. The second user equipment performs one or more of signal sending or signal reception in a first full-duplex timeslot used by the second user equipment.
S402. The second user equipment receives, in a first downlink timeslot used by the second user equipment, a signal sent by the pico base station.
S403. The second user equipment sends a signal to the pico base station in a first uplink timeslot used by the second user equipment.

A starting point and an ending point of an idle timeslot used by the macro base station are aligned with those of the first full-duplex timeslot UL/DL1 used by the second user equipment, a starting point of a first downlink timeslot DL1 used by the macro base station is aligned with that of the first downlink timeslot DL1 used by the second user equipment, and a starting point and an ending point of a first uplink timeslot UL1 used by the macro base station are aligned with those of the first uplink timeslot UL1 used by the second user equipment.

In the foregoing embodiment, second user equipment performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the second user equipment are aligned with those of a first uplink timeslot UL1 used by the macro base station, and a starting point of a first downlink timeslot DL1 used by the second user equipment is aligned with that of a first downlink timeslot DL1 used by the macro base station. Therefore, the second user equipment and the macro base station do not simultaneously send a signal or simultaneously receive a signal at a same time point. Therefore, signal sending by the macro base station does not cause interference to signal reception by a pico base station from the second user equipment, nor is signal reception by the macro base station interfered by a signal sent by the pico base station to the second user equipment.

Further, when a path loss between the pico base station and the macro base station is less than or equal to a first threshold, for example, when the pico base station is relatively close to the macro base station, the macro base station further executes the following steps:
receiving, by the macro base station, a signal in a second uplink timeslot used by the macro base station; and
receiving, by the macro base station, a signal in a third uplink timeslot used by the macro base station; where
a starting point and an ending point of the second uplink timeslot UL2 used by the macro base station are aligned with those of a second uplink timeslot UL2 used by the pico base station, and a starting point and an ending point of the third uplink timeslot UL3 used by the macro base station are aligned with those of a second full-duplex timeslot UL/DL2 used by the pico base station.

Correspondingly, first user equipment served by the macro base station further executes the following steps:
sending, by the first user equipment, a signal to the macro base station in a second uplink timeslot used by the first user equipment; and
sending, by the first user equipment, a signal to the macro base station in a third uplink timeslot used by the first user equipment; where
a starting point and an ending point of the second uplink timeslot UL2 used by the first user equipment are aligned with those of a second uplink timeslot UL2 used by the pico base station, and a starting point and an ending point of the third uplink timeslot UL3 used by the first user equipment are aligned with those of a second full-duplex timeslot UL/DL2 used by the pico base station.

When a path loss between the pico base station and the macro base station is less than or equal to a first threshold, the pico base station further executes the following steps:
receiving, by the pico base station, a signal in a second uplink timeslot used by the pico base station; and
performing, by the pico base station, one or more of signal sending or signal reception in a second full-duplex timeslot used by the pico base station; where
a starting point and an ending point of the second uplink timeslot UL2 used by the pico base station are aligned with those of a second uplink timeslot UL2 used by the macro base station, and a starting point and an ending point of the second full-duplex timeslot UL/DL2 used by the pico base station are aligned with those of a third uplink timeslot UL3 used by the macro base station.

Correspondingly, the second user equipment served by the pico base station further executes the following steps:
sending, by the second user equipment, a signal to the pico base station in a second uplink timeslot used by the second user equipment; and
performing, by the second user equipment, one or more of signal sending or signal reception in a second full-duplex timeslot used by the second user equipment; where
a starting point and an ending point of the second uplink timeslot UL2 used by the second user equipment are aligned with those of a second uplink timeslot UL2 used by the macro base station, and a starting point and an ending point of the second full-duplex timeslot UL/DL2 used by the second user equipment are aligned with those of a third uplink timeslot UL3 used by the macro base station.

Further optionally, when a path loss between the pico base station and the macro base station is greater than a first threshold, for example, when the pico base station is relatively far away from the macro base station site, the macro base station further executes the following steps:
receiving, by the macro base station, a signal in a second uplink timeslot used by the macro base station; and
receiving, by the macro base station, a signal in a third uplink timeslot used by the macro base station; where
a starting point and an ending point of the second uplink timeslot UL2 used by the macro base station are aligned with those of a third full-duplex timeslot UL/DL3 used by the pico base station, and a starting point and an ending point of the third uplink timeslot UL3 used by the macro base station are aligned with those of a second full-duplex timeslot UL/DL2 used by the pico base station.

Correspondingly, the first user equipment served by the macro base station further executes the following steps:
sending, by the first user equipment, a signal to the macro base station in a second uplink timeslot used by the first user equipment; and
sending, by the first user equipment, a signal to the macro base station in a third uplink timeslot used by the first user equipment; where
a starting point and an ending point of the second uplink timeslot UL2 used by the first user equipment are aligned with those of a third full-duplex timeslot UL/DL3 used by the pico base station, and a starting point and an ending point of the third uplink timeslot UL3 used by the first user equipment are aligned with those of a second full-duplex timeslot UL/DL2 used by the pico base station.

In addition, when a path loss between the pico base station and the macro base station is greater than a first threshold, the pico base station is further configured to execute the following steps:
performing, by the pico base station, one or more of signal sending or signal reception in a second full-duplex timeslot used by the pico base station; and
performing, by the pico base station, one or more of signal sending or signal reception in a third full-duplex timeslot used by the pico base station; where
a starting point and an ending point of the third full-duplex timeslot UL/DL3 used by the pico base station are aligned with those of a second uplink timeslot UL2 used by the macro base station, and a starting point and an ending point of the second full-duplex timeslot UL/DL2 used by the pico base station are aligned with those of a third uplink timeslot UL3 used by the macro base station.

Correspondingly, the second user equipment served by the pico base station is further configured to execute the following steps:
performing, by the second user equipment, one or more of signal sending or signal reception in a second full-duplex timeslot used by the second user equipment; and
performing, by the second user equipment, one or more of signal sending or signal reception in a third full-duplex timeslot used by the second user equipment; where
a starting point and an ending point of the third full-duplex timeslot UL/DL3 used by the second user equipment are aligned with those of a second uplink timeslot UL2 used by the macro base station, and a starting point and an ending point of the second full-duplex timeslot UL/DL2 used by the second user equipment are aligned with those of a third uplink timeslot UL3 used by the macro base station.

In the foregoing embodiment, starting points of uplink timeslots of a macro base station and a micro base station are aligned. A pico base station that is relatively close to a macro base station site, or is erected outdoors, and the like uses a relatively long uplink timeslot, where a path loss between the pico base station and the macro base station is relatively small. For example, *F*_{*p*1} used by a pico base station P1 includes lengths of a first uplink timeslot UL1 and a second uplink timeslot UL2. A pico base station that is relatively far away from the macro base station site, or is erected indoors, and the like may use a relatively short uplink timeslot, where a path loss between the pico base station and the macro base station is relatively large. For example, *F*_{*p*2} used by a pico base station P2 includes only a length of a first uplink timeslot UL1. In this case, in the shortest first uplink timeslot UL1, the macro base station and the pico base station only receive a signal from UE of the macro base station and UE of the pico base station in an uplink direction because a starting point and an ending point of the first uplink timeslot UL1 of the macro base station are aligned with those of the first uplink timeslot UL1 of each of the two pico base stations. Therefore, no interference from signal transmission by the pico base station is caused, due to simultaneous reception and sending, to signal reception by the macro base station. The corresponding macro base station timeslot UL1 is referred to as a timeslot without PT2M (Pico Transmission to Macro Reception) interference. However, in a macro cell, in a time that exceeds the shortest first uplink timeslot UL1, some pico base stations with relatively short uplink timeslots are already in full-duplex timeslots, for example, the pico base station P2 shown in FIG. 3, that is, the pico base station P2 performs downlink transmission in a third full-duplex timeslot UL/DL3. Therefore, PT2M interference may exist. However, because the pico base station P2 is relatively far away from the macro base station site, or is erected indoors, and the like, a path loss between the pico base station P2 and the macro base station is relatively large. Therefore, PT2M interference to the macro base station is relatively low. Therefore, a macro base station timeslot corresponding to this period of time is referred to as a timeslot with low PT2M interference.

A pico base station may perform full-duplex transmission and reception in a full-duplex timeslot, and the macro base station has two possible operations in the full-duplex timeslot of the pico base station: One operation is no reception or transmission, and a corresponding timeslot is referred to as an idle timeslot. In this case, a spectrum resource of the macro base station may be used by first user equipment in a macro cell to perform D2D (Device to Device) communication. Referring to FIG. 3, first full-duplex timeslots UL/DL1 used by the pico base station P1 and the pico base station P2 are corresponding to an idle timeslot of the macro base station. The other operation is an uplink reception operation. Referring to FIG. 3, second full-duplex timeslots UL/DL2 used by the pico base station P1 and the pico base station P2 are corresponding to a third uplink timeslot UL3 used by the macro base station to perform uplink reception. In this case, apparently, PT2M interference exists. Therefore, a corresponding macro base station timeslot is referred to as a timeslot with PT2M interference.

In this way, during uplink transmission scheduling, a macro base station allocates an uplink transmission resource of user equipment with a relatively low SINR (Signal to Interference plus Noise Ratio, signal to interference plus noise ratio), for example, user equipment on the edge of a macro cell, to a timeslot without PT2M interference, so as to ensure effective reception of a signal of the user equipment. An uplink transmission resource of user equipment with a relatively high signal to interference plus noise ratio, for example, user equipment at the center of a macro cell, may be allocated to a timeslot with low PT2M interference or even a timeslot with PT2M interference. Even if PT2M interference exists, reception of a wanted signal of the user equipment is not apparently affected because the wanted signal has relatively high power.

Therefore, uplink timeslots of small cells in a macro cell are distinguished according to lengths that include a length of a shortest first uplink timeslot UL1 and a length of a longest uplink timeslot that includes a first uplink timeslot UL1 and a second uplink timeslot UL2. An uplink timeslot is determined by using an uplink transmission bandwidth requirement of the macro cell, SINR distribution of an uplink user equipment, distribution of the small cells in the macro cell (which affects a magnitude of a path loss between the macro base station and a pico base station), and the like. For example, if there are more cell-edge user equipments distributed in a macro cell, a relatively long first uplink timeslot UL1 should be configured; on the contrary, if there are fewer cell-edge user equipments distributed in a macro cell, a relatively short first uplink timeslot UL1 may be configured, so that more time that may be used to perform a full-duplex operation is reserved for a pico base station, which improves spectrum utilization. For another example, a relatively short first uplink timeslot UL1 may be configured if a main propagation path between antennas of a pico base station and a macro base station is effectively blocked when a small cell in a macro cell is relatively far away from the center of the macro cell, or a small cell is erected in an area with a quite large electromagnetic wave wall-penetration loss, for example, an underground mall or an office building, or an electromagnetic absorption or shielding material is used when the pico base station is being erected.

Optionally, when a path loss between the pico base station and the macro base station is less than or equal to a first threshold, the macro base station is further configured to execute the following steps:
receiving, by the macro base station, a signal in a second uplink timeslot used by the macro base station; and
receiving, by the macro base station, a signal in a third uplink timeslot used by the macro base station; where
a starting point and an ending point of the second uplink timeslot UL2 used by the macro base station are aligned with those of a third full-duplex timeslot UL/DL3 used by the pico base station, and a starting point and an ending point of the third uplink timeslot UL3 used by the macro base station are aligned with those of a second full-duplex timeslot UL/DL2 used by the pico base station.

Correspondingly, the first user equipment served by the macro base station is further configured to execute the following steps:
sending, by the first user equipment, a signal to the macro base station in a second uplink timeslot used by the first user equipment; and
sending, by the first user equipment, a signal to the macro base station in a third uplink timeslot used by the first user equipment; where
a starting point and an ending point of the second uplink timeslot UL2 used by the first user equipment are aligned with those of a third full-duplex timeslot UL/DL3 used by the pico base station, and a starting point and an ending point of the third uplink timeslot UL3 used by the first user equipment are aligned with those of a second full-duplex timeslot UL/DL2 used by the pico base station.

When a path loss between the pico base station and the macro base station is less than or equal to a first threshold, the pico base station is further configured to execute the following steps:
performing, by the pico base station, one or more of signal sending or signal reception in a second full-duplex timeslot used by the pico base station; and
performing, by the pico base station, one or more of signal sending or signal reception in a third full-duplex timeslot used by the pico base station; where
a starting point and an ending point of the third full-duplex timeslot UL/DL3 used by the pico base station are aligned with those of a second uplink timeslot UL2 used by the macro base station, and a starting point and an ending point of the second full-duplex timeslot UL/DL2 used by the pico base station are aligned with those of a third uplink timeslot UL3 used by the macro base station.

Correspondingly, the second user equipment served by the pico base station is further configured to execute the following steps:
performing, by the second user equipment, one or more of signal sending or signal reception in a second full-duplex timeslot used by the second user equipment; and
performing, by the second user equipment, one or more of signal sending or signal reception in a third full-duplex timeslot used by the second user equipment; where
a starting point and an ending point of the third full-duplex timeslot UL/DL3 used by the second user equipment are aligned with those of a second uplink timeslot UL2 used by the macro base station, and a starting point and an ending point of the second full-duplex timeslot UL/DL2 used by the second user equipment are aligned with those of a third uplink timeslot UL3 used by the macro base station.

Further, when the path loss between the pico base station and the macro base station is less than or equal to the first threshold, that the pico base station performs the one or more of signal sending or signal reception in the third full-duplex timeslot used by the pico base station includes one or more of the following: when a traffic volume of to-be-transmitted downlink data is greater than a first downlink traffic volume threshold, and a traffic volume of to-be-transmitted uplink data is less than a second uplink traffic volume threshold, sending the to-be-transmitted downlink data to the user equipment in a first preset quantity of timeslot resources in the third full-duplex timeslot used by the pico base station, where the first preset quantity of timeslot resources are only used to send a downlink signal; or
when a traffic volume of to-be-transmitted uplink data is greater than a first uplink traffic volume threshold, and a traffic volume of to-be-transmitted downlink data is less than a second downlink traffic volume threshold, receiving, in a second preset quantity of timeslot resources in the third full-duplex timeslot used by the pico base station, the to-be-transmitted uplink data sent by the user equipment, where the second preset quantity of timeslot resources are only used to receive an uplink signal.

That the second user equipment served by the pico base station performs the one or more of signal sending or signal reception in the third full-duplex timeslot used by the second user equipment includes one or more of the following:
when a traffic volume of to-be-transmitted downlink data is greater than a first downlink traffic volume threshold, and a traffic volume of to-be-transmitted uplink data is less than a second uplink traffic volume threshold, receiving, in a first preset quantity of timeslot resources in the third full-duplex timeslot used by the second user equipment, the to-be-transmitted downlink data sent by the pico base station, where the first preset quantity of timeslot resources are only used to receive a downlink signal; and/or
when a traffic volume of to-be-transmitted uplink data is greater than a first uplink traffic volume threshold, and a traffic volume of to-be-transmitted downlink data is less than a second downlink traffic volume threshold, sending the to-be-transmitted uplink data to the pico base station in a second preset quantity of timeslot resources in the third full-duplex timeslot used by the second user equipment, where the second preset quantity of timeslot resources are only used to send an uplink signal.

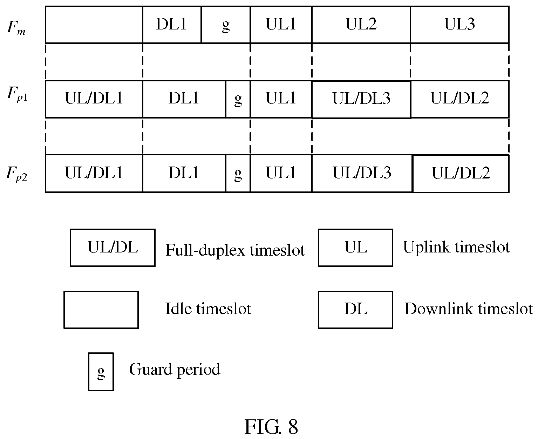

Referring to FIG. 8, the pico base station P2 uses the third full-duplex timeslot UL/DL3 in *F*_{*p*2}, that is, a time segment corresponding to the timeslot of the macro base station and with low PT2M interference, to perform full-duplex communication. *F*_{*p*2} used by the pico base station P2 includes the third full-duplex timeslot UL/DL3. In the third full-duplex timeslot UL/DL3, the pico base station always preferentially schedules transmission in a half-duplex mode.

When a traffic volume of to-be-transmitted downlink data is greater than a first downlink traffic volume threshold, and a traffic volume of to-be-transmitted uplink data is less than a second uplink traffic volume threshold, and/or when a traffic volume of to-be-transmitted uplink data is greater than a first uplink traffic volume threshold, and a traffic volume of to-be-transmitted downlink data is less than a second downlink traffic volume threshold, the pico base station always preferentially schedules transmission in a half-duplex mode. Specifically, according to the traffic volume of the to-be-transmitted data, downlink-first transmission is performed statically or dynamically in the third full-duplex timeslot (that is, the third full-duplex timeslot is only used to send a downlink signal), or uplink-first transmission is performed statically or dynamically in the third full-duplex timeslot (that is, the third full-duplex timeslot is only used to receive an uplink signal). When the pico base station needs to send a signal to UE, if channel resources are sufficient in a downlink timeslot, the pico base station sends the downlink signal to the UE by using a channel resource in the downlink timeslot; otherwise, when channel resources are insufficient in a downlink timeslot, if channel resources are sufficient in a downlink transmission-first full-duplex timeslot, a channel resource in the downlink transmission-first full-duplex timeslot is allocated to send the signal to the UE. Similarly, when UE needs to send an uplink signal to the pico base station, if channel resources are sufficient in an uplink timeslot, a channel resource in the uplink timeslot is allocated to send the uplink signal to the pico base station; otherwise, when channel resources are insufficient in an uplink timeslot, if channel resources are sufficient in an uplink transmission-first full-duplex timeslot, a channel resource in the uplink transmission-first full-duplex timeslot is allocated to send the uplink signal to the pico base station. The pico base station starts to simultaneously send a downlink signal and receive an uplink signal in some or all timeslots in full-duplex timeslots only when all the full-duplex timeslots are already allocated for uplink or downlink transmission but there is still uplink and/or downlink data to be transmitted. When the traffic volume of the to-be-transmitted downlink data is greater than the second downlink traffic volume threshold, and/or the traffic volume of the to-be-transmitted uplink data is greater than the second uplink traffic volume threshold, transmission is then scheduled by using a full-duplex timeslot. Therefore, uplink signal reception by the pico base station in the third full-duplex timeslot UL/DL3 does not cause interference to signal reception by the macro base station from the first user equipment, so that more resources that may be used to perform a full-duplex operation are reserved for the pico base station P2 while an interference-optimal principle is considered, which improves spectrum utilization.

Based on the foregoing embodiment, for the pico base station, that the pico base station sends a signal in the first downlink timeslot used by the pico base station specifically includes: when the traffic volume of the to-be-transmitted downlink data does not exceed the first downlink traffic volume threshold, sending, by the pico base station, the to-be-transmitted downlink data in the first downlink timeslot used by the pico base station.

That the pico base station sends a signal in the first uplink timeslot used by the pico base station specifically includes: when the traffic volume of the to-be-transmitted uplink data does not exceed the first uplink traffic volume threshold, receiving, by the pico base station, the to-be-transmitted uplink data in the first uplink timeslot used by the pico base station.

Correspondingly, that the second user equipment served by the pico base station receives, in the first downlink timeslot used by the second user equipment, a signal sent by the pico base station specifically includes: when the traffic volume of the to-be-transmitted downlink data does not exceed the first downlink traffic volume threshold, receiving, by the second user equipment in the first downlink timeslot used by the second user equipment, the to-be-transmitted downlink data sent by the pico base station.

That the second user equipment served by the pico base station sends a signal to the pico base station in the first uplink timeslot used by the second user equipment specifically includes: when the traffic volume of the to-be-transmitted uplink data does not exceed the first uplink traffic volume threshold, sending, by the second user equipment, the to-be-transmitted uplink data in the first uplink timeslot used by the second user equipment.

In this way, when a traffic volume of to-be-transmitted downlink data does not exceed a first downlink traffic volume threshold, a pico base station sends a downlink signal only in a first downlink timeslot; or when a traffic volume of to-be-transmitted uplink data does not exceed a first uplink traffic volume threshold, a pico base station receives an uplink signal only in a first uplink timeslot, so that interference from signal sending by the pico base station to signal reception by a macro base station from first user equipment and interference from signal sending by the macro base station to signal reception by the pico base station from second user equipment are avoided to the greatest extent.

In addition, an embodiment of the present invention provides a structure of a radio frame of the macro base station. The radio frame includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1. An embodiment of the present invention provides a structure of a radio frame of the pico base station. The radio frame used by the pico base station includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1.

In addition, an embodiment of the present invention further provides a radio frame used by the macro base station. The radio frame includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6. A radio frame used by the pico base station includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6.

It may be understood that, because the macro base station performs data transmission with the first user equipment served by the macro base station, a structure of a radio frame used by the first user equipment served by the macro base station is the same as the structure of the radio frame used by the macro base station. Likewise, a structure of a radio frame used by the second user equipment served by the pico base station is the same as the structure of the radio frame used by the pico base station.

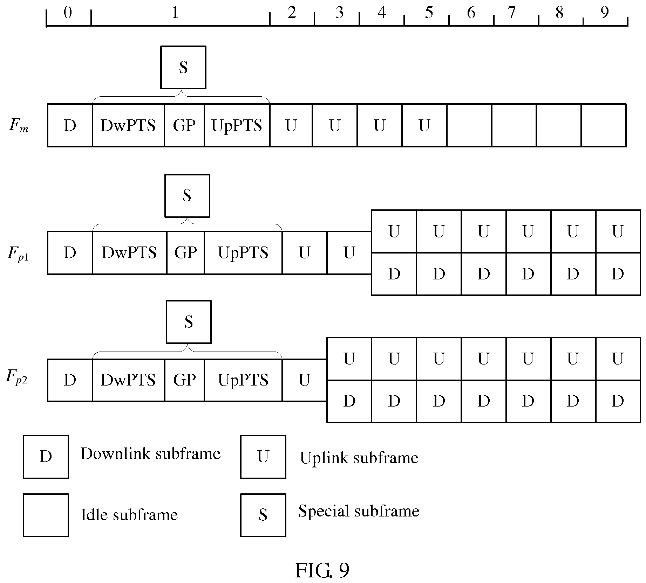

FIG. 9, FIG. 10, and FIG. 11 respectively show three embodiments of a structure of a radio frame that is in a HetNet and that supports full-duplex. The structure of the radio frame is obtained by extending an existing LTE-TDD radio frame structure. For a detailed description of the existing LTE-TDD radio frame structure, reference may be made to the 3GPP technical specification TS 36.211 V12.0.0 (2013-12). The three embodiments are similar and differ in lengths of timeslots. An embodiment shown in FIG. 9 is used as an example. According to the 3GPP technical specification, U indicates an uplink subframe, D indicates a downlink subframe, and S indicates a special subframe.

For *Fₘ* used by a macro base station Macro, a subframe 0 and a downlink pilot timeslot (English: Downlink Pilot Time Slot, DwPTS for short) in a subframe 1 in *Fₘ* are used as a first downlink timeslot, an uplink pilot timeslot (English: Uplink Pilot Time Slot, UpPTS for short) in the subframe 1 and a subframe 2 are used as a first uplink timeslot, a subframe 3 is used as a second uplink timeslot, a subframe 4 and a subframe 5 are used as a third uplink timeslot, and subframes 6 to 9 are used as an idle timeslot. A guard period is set between the downlink pilot timeslot in the subframe 1 and the uplink pilot timeslot in the subframe 1.

For *F*_{*p*1} used by a pico base station P1, a subframe 0 and a downlink pilot timeslot in a subframe 1 in *F*_{*p*1} are used as a first downlink timeslot, an uplink pilot timeslot in the subframe 1 and a subframe 2 are used as a first uplink timeslot, and subframes 3 is used as a second uplink timeslot, and subframes 4 to 9 are used as a full-duplex timeslot. A guard period is set between the downlink pilot timeslot in the subframe 1 and the uplink pilot timeslot in the subframe 1.

For *F*_{*p*2} used by a pico base station P2, a subframe 0 and a downlink pilot timeslot in a subframe 1 in *F*_{*p*2} are used as a first downlink timeslot, an uplink pilot timeslot in the subframe 1 and a subframe 2 are used as a first uplink timeslot, and subframes 3 to 9 are used as a full-duplex timeslot. A guard period is set between the downlink pilot timeslot in the subframe 1 and the uplink pilot timeslot in the subframe 1.

Therefore, for the macro base station, the second half frame (a timeslot 5) of the subframe 2 is a timeslot with low PT2M interference. In addition, the macro base station configures a timeslot 3, a timeslot 4, and the timeslot 5 as a timeslot with PT2M interference, allowing uplink signal reception from UE with a high signal-to-noise ratio, for example, UE at the center of a macro cell; configuresa timeslot 6, a timeslot 7, a timeslot 8, and a timeslot 9 as an idle timeslot in which the macro base station does not perform reception or transmission, but uses an uplink spectrum resource of the macro base station for D2D communication by UE in the macro cell.

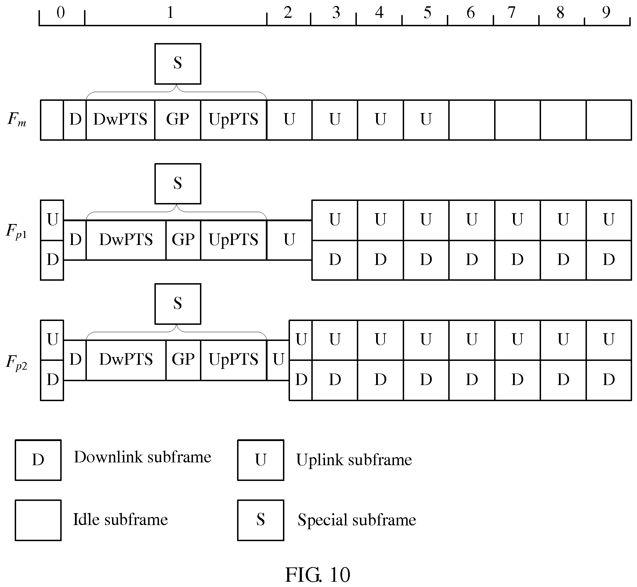

FIG. 10 shows another embodiment of a structure of a radio frame in a HetNet in an LTE system.

For *Fₘ* used by a macro base station Macro, the first half frame of a subframe 0 in *Fₘ* is used as an idle timeslot, the second half frame of the subframe 0 and a downlink pilot timeslot in a subframe 1 are used as a first downlink timeslot, an uplink pilot timeslot in the subframe 1 and the first half subframe of a subframe 2 are used as a first uplink timeslot, the second half frame of the subframe 2 is used as a second uplink timeslot, subframes 3 to 5 are used as a third uplink timeslot, and subframes 6 to 9 are used as an idle timeslot. A guard period is set between the downlink pilot timeslot in the subframe 1 and the uplink pilot timeslot in the subframe 1.

For *F*_{*p*1} used by a pico base station P1, the first half frame of a subframe 0 in *F*_{*p*1} is used as a full-duplex timeslot, the second half frame of the subframe 0 and a downlink pilot timeslot in a subframe 1 are used as a first downlink timeslot, an uplink pilot timeslot in the subframe 1 and the first half subframe of a subframe 2 are used as a first uplink timeslot, the second half frame of the subframe 2 is used as a second uplink timeslot, and subframes 3 to 9 are used as a full-duplex timeslot. A guard period is set between the downlink pilot timeslot in the subframe 1 and the uplink pilot timeslot in the subframe 1.

For *F*_{*p*2} used by a pico base station P2, the first half frame of a subframe 0 in *F*_{*p*2} is used as a full-duplex timeslot, the second half frame of the subframe 0 and a downlink pilot timeslot in a subframe 1 are used as a first downlink timeslot, an uplink pilot timeslot in the subframe 1 and the first half subframe of a subframe 2 are used as a first uplink timeslot, and the second half frame of the subframe 2 and subframes 3 to 9 are used as a full-duplex timeslot. A guard period is set between the downlink pilot timeslot in the subframe 1 and the uplink pilot timeslot in the subframe 1.

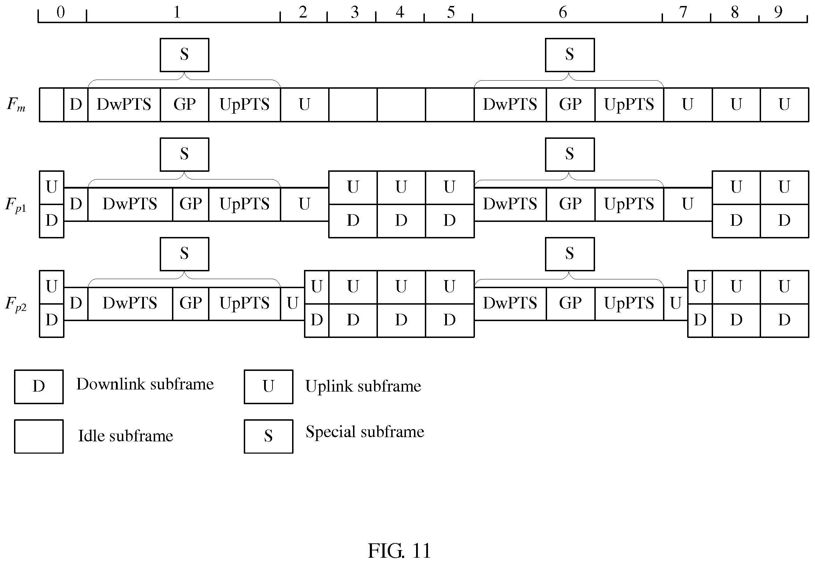

FIG. 11 shows still another embodiment of a structure of a radio frame in a HetNet in an LTE system.

For *Fₘ* used by a macro base station Macro, the first half frame of a subframe 0 in *Fₘ* is used as an idle timeslot, the second half frame of a subframe 0 and a downlink pilot timeslot in a subframe 1 in *Fₘ* are used as a first downlink timeslot, an uplink pilot timeslot in the subframe 1 and the first half frame of a subframe 2 are used as a first uplink timeslot, the second half frame of the subframe 2 is used as a second uplink timeslot, subframes 3 to 5 are used as an idle timeslot, a downlink pilot timeslot in a subframe 6 is used as a first downlink timeslot, an uplink pilot timeslot in the subframe 6 and the first half frame of a subframe 7 are used as a first uplink timeslot, the second half frame of the subframe 7 is used as a second uplink timeslot, and a subframe 8 and a subframe 9 are used as a third uplink timeslot. A guard period is set between the downlink pilot timeslot in the subframe 1 and the uplink pilot timeslot in the subframe 1, and a guard period is set between the downlink pilot timeslot in the subframe 6 and the uplink pilot timeslot in the subframe 6.

For *F*_{*p*1} used by a pico base station P1, the first half frame of a subframe 0 in *F*_{*p*1} is used as a full-duplex timeslot, the second half frame of the subframe 0 and a downlink pilot timeslot in a subframe 1 in *F*_{*p*1} are used as a first downlink timeslot, an uplink pilot timeslot in the subframe 1 and the first half frame of a subframe 2 are used as a first uplink timeslot, the second half frame of the subframe 2 is used as a second uplink timeslot, and subframes 3 to 5 are used as a full-duplex timeslot, a downlink pilot timeslot in a subframe 6 is used as a first downlink timeslot, an uplink pilot timeslot in the subframe 6 and the first half frame of a subframe 7 are used as a first uplink timeslot, the second half frame of the subframe 7 is used as a second uplink timeslot, and a subframe 8, and a subframe 9 are used as a full-duplex timeslot. A guard period is set between the downlink pilot timeslot in the subframe 1 and the uplink pilot timeslot in the subframe 1, and a guard period is set between the downlink pilot timeslot in the subframe 6 and the uplink pilot timeslot in the subframe 6.

For *F*_{*p*2} used by a pico base station P2, the first half frame of a subframe 0 in *F*_{*p*2} is used as a full-duplex timeslot, the second half frame of the subframe 0 and a downlink pilot timeslot in a subframe 1 in *F*_{*p*2} are used as a first downlink timeslot, an uplink pilot timeslot in the subframe 1 and the first half frame of a subframe 2 are used as a first uplink timeslot, the second half frame of the subframe 2 and subframes 3 to 5 are used as a full-duplex timeslot, a downlink pilot timeslot in a subframe 6 is used as a first downlink timeslot, an uplink pilot timeslot in the subframe 6 and the first half frame of a subframe 7 are used as a first uplink timeslot, the second half frame of the subframe 7 and a subframe 8 and a subframe 9 are used as a full-duplex timeslot. A guard period is set between the downlink pilot timeslot in the subframe 1 and the uplink pilot timeslot in the subframe 1, and a guard period is set between the downlink pilot timeslot in the subframe 6 and the uplink pilot timeslot in the subframe 6.

It should be noted herein that FIG. 9, FIG. 10, and FIG. 11 only show a radio frame structure of one carrier, and the implementation solution in the present invention may be used for some or all carriers for a case of a pair of carriers or multiple carriers. To avoid repetition, details are not shown in the figures.

In the foregoing embodiment, a pico base station performs full-duplex communication in a first full-duplex timeslot corresponding to an idle timeslot used by a macro base station, and the macro base station does not send or receive a signal in the idle timeslot. In addition, the macro base station and the pico base station only transmit a signal in corresponding uplink timeslots, and the macro base station and the pico base station only receive a signal in corresponding downlink timeslots. Therefore, a case in which the macro base station or the pico base station sends a signal at a same time point when the other one receives a signal is avoided, which can reduce interference between communications nodes caused by signal transmission to signal reception in a full-duplex wireless communications system.

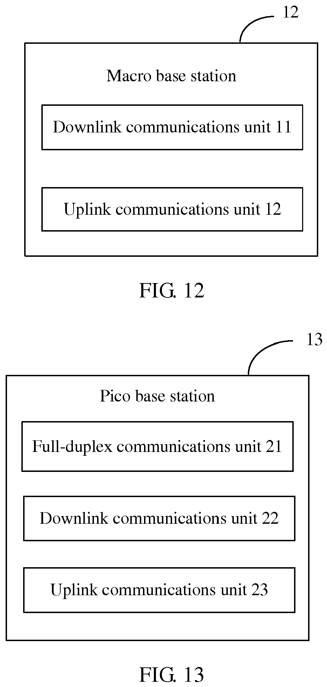

Referring to FIG. 12, an embodiment of the present invention provides a macro base station, and the macro base station is applied to a wireless communications system in which a macro cell corresponding to the macro base station includes a small cell corresponding to a pico base station, and is configured to implement the foregoing wireless communication method executed by a macro base station. The macro base station and the pico base station use a same carrier to respectively communicate with user equipment served by the macro base station and user equipment served by the pico base station. The macro base station includes:
a downlink communications unit 11, configured to send a signal in a first downlink timeslot used by the macro base station; and
an uplink communications unit 12, configured to receive a signal in a first uplink timeslot used by the macro base station; where
a starting point and an ending point of an idle timeslot used by the macro base station are aligned with those of a first full-duplex timeslot used by the pico base station, a starting point of the first downlink timeslot used by the macro base station is aligned with that of a first downlink timeslot used by the pico base station, and a starting point and an ending point of the first uplink timeslot used by the macro base station are aligned with those of a first uplink timeslot used by the pico base station.

The macro base station provided in the foregoing embodiment does not send or receive a signal in an idle timeslot used by the macro base station, and a pico base station performs full-duplex communication in a first full-duplex timeslot corresponding to the idle timeslot used by the macro base station. In addition, a starting point and an ending point of a first uplink timeslot UL1 used by the macro base station are aligned with those of a first uplink timeslot UL1 used by the pico base station, and a starting point of a first downlink timeslot DL1 used by the macro base station is aligned with that of a first downlink timeslot DL1 used by the pico base station. Therefore, the macro base station or the pico base station does not send a signal at a same time point when the other one receives a signal. Therefore, signal sending by the pico base station does not cause interference to signal reception by the macro base station, nor does signal sending by the macro base station cause interference to signal reception by the pico base station.

Optionally, when a path loss between the pico base station and the macro base station is less than or equal to a first threshold, the uplink communications unit 12 is further configured to receive a signal in a second uplink timeslot used by the macro base station; and
the uplink communications unit 12 is further configured to receive a signal in a third uplink timeslot used by the macro base station.

A starting point and an ending point of the second uplink timeslot used by the macro base station are aligned with those of a second uplink timeslot used by the pico base station. Therefore, no interference between communications nodes caused by signal transmission to signal reception exists. However, a starting point and an ending point of the third uplink timeslot used by the macro base station are aligned with those of a second full-duplex timeslot used by the pico base station. Signal sending by the pico base station in the second full-duplex timeslot used by the pico base station causes interference to signal reception by the macro base station. However, full-duplex communication by the pico base station by using the second full-duplex timeslot herein improves carrier utilization.

Optionally, the uplink communications unit 12 is further configured to receive a signal in a second uplink timeslot used by the macro base station; and
the uplink communications unit 12 is further configured to receive a signal in a third uplink timeslot used by the macro base station; where
a starting point and an ending point of the second uplink timeslot used by the macro base station are aligned with those of a third full-duplex timeslot used by the pico base station, and a starting point and an ending point of the third uplink timeslot used by the macro base station are aligned with those of a second full-duplex timeslot used by the pico base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station is interfered. However, performing, by the pico base station, a full-duplex operation in the third full-duplex timeslot and the second full-duplex timeslot used by the pico base station improves carrier utilization. Alternatively, when a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

Further, a radio frame used by the macro base station includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1. Alternatively, a radio frame used by the macro base station includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6. For a specific frame structure, reference may be made to embodiments corresponding to FIG. 9, FIG. 10, and FIG. 11, and details are not described herein again.

Referring to FIG. 13, an embodiment of the present invention provides a pico base station, and the pico base station is applied to a wireless communications system in which a macro cell corresponding to a macro base station includes a small cell corresponding to the pico base station, and is configured to implement the foregoing wireless communication method executed by a pico base station. The macro base station and the pico base station use a same carrier to respectively communicate with user equipment served by the macro base station and user equipment served by the pico base station. The pico base station includes:
a full-duplex communications unit 21, configured to perform one or more of signal sending or signal reception in a first full-duplex timeslot used by the pico base station;
a downlink communications unit 22, configured to send a signal in a first downlink timeslot used by the pico base station; and
an uplink communications unit 23, configured to receive a signal in a first uplink timeslot used by the pico base station; where
a starting point and an ending point of an idle timeslot used by the macro base station are aligned with those of the first full-duplex timeslot used by the pico base station, a starting point of a first downlink timeslot used by the macro base station is aligned with that of the first downlink timeslot used by the pico base station, and a starting point and an ending point of a first uplink timeslot used by the macro base station are aligned with those of the first uplink timeslot used by the pico base station.

The pico base station provided in the foregoing embodiment performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the pico base station are aligned with those of a first uplink timeslot UL1 used by the macro base station, and a starting point of a first downlink timeslot DL1 used by the pico base station is aligned with that of a first downlink timeslot DL1 used by the macro base station. Therefore, one of the pico base station or the macro base station does not send a signal at a same time point when the other one receives a signal. Therefore, signal sending by the pico base station does not cause interference to signal reception by the macro base station, nor does signal sending by the macro base station cause interference to signal reception by the pico base station.

Optionally, a path loss between the pico base station and the macro base station is less than or equal to a first threshold;
the uplink communications unit 23 is further configured to receive a signal in a second uplink timeslot used by the pico base station; and
the full-duplex communications unit 21 is further configured to perform one or more of signal sending or signal reception in a second full-duplex timeslot used by the pico base station; where
a starting point and an ending point of the second uplink timeslot used by the pico base station are aligned with those of a second uplink timeslot used by the macro base station, and a starting point and an ending point of the second full-duplex timeslot used by the pico base station are aligned with those of a third uplink timeslot used by the macro base station.

The starting point and the ending point of the second uplink timeslot used by the pico base station are aligned with those of the second uplink timeslot used by the macro base station. Therefore, no interference between communications nodes caused by signal transmission to signal reception exists. However, the starting point and the ending point of the second full-duplex timeslot used by the pico base station are aligned with those of the third uplink timeslot used by the macro base station. Signal sending by the pico base station in the second full-duplex timeslot used by the pico base station causes interference to signal reception by the macro base station. However, full-duplex communication by the pico base station by using the second full-duplex timeslot herein improves carrier utilization.

Alternatively, the full-duplex communications unit 21 is further configured to perform one or more of signal sending or signal reception in a second full-duplex timeslot used by the pico base station; and
the full-duplex communications unit 21 is further configured to perform one or more of signal sending or signal reception in a third full-duplex timeslot used by the pico base station; where
a starting point and an ending point of the third full-duplex timeslot used by the pico base station are aligned with those of a second uplink timeslot used by the macro base station, and a starting point and an ending point of the second full-duplex timeslot used by the pico base station are aligned with those of a third uplink timeslot used by the macro base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station is interfered. However, performing, by the pico base station, a full-duplex operation in the third full-duplex timeslot and the second full-duplex timeslot used by the pico base station improves carrier utilization. When a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

Preferably, when a path loss between the pico base station and the macro base station is less than or equal to a first threshold, the full-duplex communications unit 21 is specifically configured to execute one or more of the following operations: when a traffic volume of to-be-transmitted downlink data is greater than a first downlink traffic volume threshold, and a traffic volume of to-be-transmitted uplink data is less than a second uplink traffic volume threshold, sending the to-be-transmitted downlink data to the user equipment in a first preset quantity of timeslot resources in the third full-duplex timeslot, where the first preset quantity of timeslot resources are only used to send a downlink signal; or
when a traffic volume of to-be-transmitted uplink data is greater than a first uplink traffic volume threshold, and a traffic volume of to-be-transmitted downlink data is less than a second downlink traffic volume threshold, receiving, in a second preset quantity of timeslot resources in the third full-duplex timeslot, the to-be-transmitted uplink data sent by the user equipment, where the second preset quantity of timeslot resources are only used to receive an uplink signal.

When a traffic volume of to-be-transmitted downlink data is greater than a first downlink traffic volume threshold, and a traffic volume of to-be-transmitted uplink data is less than a second uplink traffic volume threshold, and/or when a traffic volume of to-be-transmitted uplink data is greater than a first uplink traffic volume threshold, and a traffic volume of to-be-transmitted downlink data is less than a second downlink traffic volume threshold, a pico base station always preferentially schedules transmission in a half-duplex mode. Therefore, uplink signal reception by the pico base station in a third full-duplex timeslot UL/DL3 does not cause interference to signal reception by a macro base station from user equipment, so that more resources that may be used to perform a full-duplex operation are reserved for a pico base station P2 while an interference-optimal principle is considered, which improves spectrum utilization.

Further, the downlink communications unit 22 is specifically configured to: when the traffic volume of the to-be-transmitted downlink data does not exceed the first downlink traffic volume threshold, send the to-be-transmitted downlink data in the first downlink timeslot used by the pico base station.

The uplink communications unit 23 is specifically configured to: when the traffic volume of the to-be-transmitted uplink data does not exceed the first uplink traffic volume threshold, receive the to-be-transmitted uplink data in the first uplink timeslot used by the pico base station.

Herein, when a traffic volume of downlink data does not exceed a first downlink traffic volume threshold, a pico base station preferentially sends the to-be-transmitted downlink data by using a first downlink timeslot used by the pico base station; or when a traffic volume of to-be-transmitted uplink data does not exceed a first uplink traffic volume threshold, a pico base station preferentially receives the to-be-transmitted uplink data by using a first uplink timeslot used by the pico base station. A first downlink timeslot used by a macro base station falls within the first downlink timeslot used by the pico base station, and a starting point and an ending point of a first uplink timeslot used by the macro base station are aligned with those of the first uplink timeslot used by the pico base station. Therefore, interference between communications nodes caused by signal transmission to signal reception is avoided.

Further, a radio frame used by the pico base station includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1. Alternatively, a radio frame used by the pico base station includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6. For a specific frame structure, reference may be made to embodiments corresponding to FIG. 9, FIG. 10, and FIG. 11, and details are not described herein again.

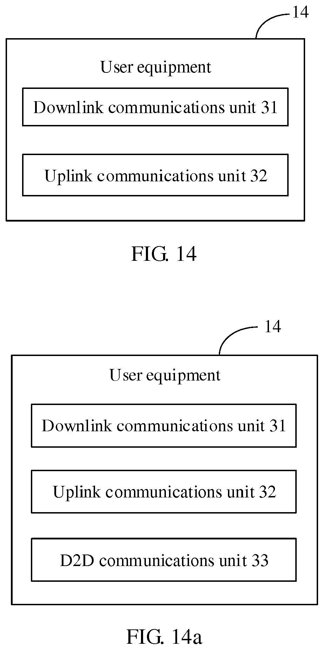

Referring to FIG. 14, user equipment is provided, and the user equipment is applied to a wireless communications system in which a macro cell corresponding to a macro base station includes a small cell corresponding to a pico base station, and is configured to implement the signal transmission method, in the foregoing embodiment, executed by first user equipment served by a macro base station. The macro base station and the pico base station use a same carrier to respectively communicate with user equipment served by the macro base station and user equipment served by the pico base station. The first user equipment includes:
a downlink communications unit 31, configured to receive, in a first downlink timeslot used by the first user equipment, a signal sent by the macro base station; and
an uplink communications unit 32, configured to send a signal to the macro base station in a first uplink timeslot used by the first user equipment; where
a starting point and an ending point of an idle timeslot used by the first user equipment are aligned with those of a first full-duplex timeslot used by the pico base station, a starting point of the first downlink timeslot used by the first user equipment is aligned with that of a first downlink timeslot used by the pico base station, and a starting point and an ending point of the first uplink timeslot used by the first user equipment are aligned with those of a first uplink timeslot used by the pico base station.

The first user equipment provided in the foregoing embodiment does not perform signal transmission with a macro base station in an idle timeslot used by the first user equipment, and a pico base station performs full-duplex communication in a first full-duplex timeslot corresponding to the idle timeslot used by the first user equipment. In addition, a starting point and an ending point of a first uplink timeslot UL1 used by the first user equipment are aligned with those of a first uplink timeslot UL1 used by the pico base station, and a starting point of a first downlink timeslot DL1 used by the first user equipment is aligned with that of a first downlink timeslot DL1 used by the pico base station. Therefore, the first user equipment and the pico base station do not simultaneously send a signal or simultaneously receive a signal at a same time point. Therefore, signal sending by the pico base station does not cause interference to signal reception by the macro base station from the first user equipment, nor is signal reception by the pico base station interfered by a signal sent by the macro base station to the first user equipment.

Further, referring to FIG. 14a, the first user equipment further includes a D2D communications unit 33, configured to perform one or more of signal sending or signal reception in a device-to-device D2D communication manner in the idle timeslot used by the first user equipment.

Herein, the macro base station does not use an idle timeslot to perform signal transmission, but the first user equipment performs signal transmission in a device-to-device D2D communication manner in the idle timeslot used by the first user equipment. Therefore, carrier spectrum utilization is improved.

Optionally, when a path loss between the pico base station and the macro base station is less than or equal to a first threshold, the uplink communications unit 32 is further configured to send a signal to the macro base station in a second uplink timeslot used by the first user equipment; and
the uplink communications unit 32 is further configured to send a signal to the macro base station in a third uplink timeslot used by the first user equipment; where
a starting point and an ending point of the second uplink timeslot used by the first user equipment are aligned with those of a second uplink timeslot used by the pico base station, and a starting point and an ending point of the third uplink timeslot used by the first user equipment are aligned with those of a second full-duplex timeslot used by the pico base station.

The starting point and the ending point of the second uplink timeslot used by the first user equipment are aligned with those of the second uplink timeslot used by the pico base station. Therefore, no interference between communications nodes caused by signal transmission to signal reception exists. However, the starting point and the ending point of the third uplink timeslot used by the first user equipment are aligned with those of the second full-duplex timeslot used by the pico base station. Signal sending by the pico base station in the second full-duplex timeslot used by the pico base station causes interference to signal reception by the macro base station from the first user equipment. However, full-duplex communication by the pico base station by using the second full-duplex timeslot herein improves carrier utilization.

Optionally, the uplink communications unit 32 is further configured to send a signal to the macro base station in a second uplink timeslot used by the first user equipment; and
the uplink communications unit 32 is further configured to send a signal to the macro base station in a third uplink timeslot used by the first user equipment; where
a starting point and an ending point of the second uplink timeslot used by the first user equipment are aligned with those of a third full-duplex timeslot used by the pico base station, and a starting point and an ending point of the third uplink timeslot used by the first user equipment are aligned with those of a second full-duplex timeslot used by the pico base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station from first user equipment is interfered. However, performing, by the pico base station, a full-duplex operation in the third full-duplex timeslot and the second full-duplex timeslot used by the pico base station improves carrier utilization. Alternatively, when a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

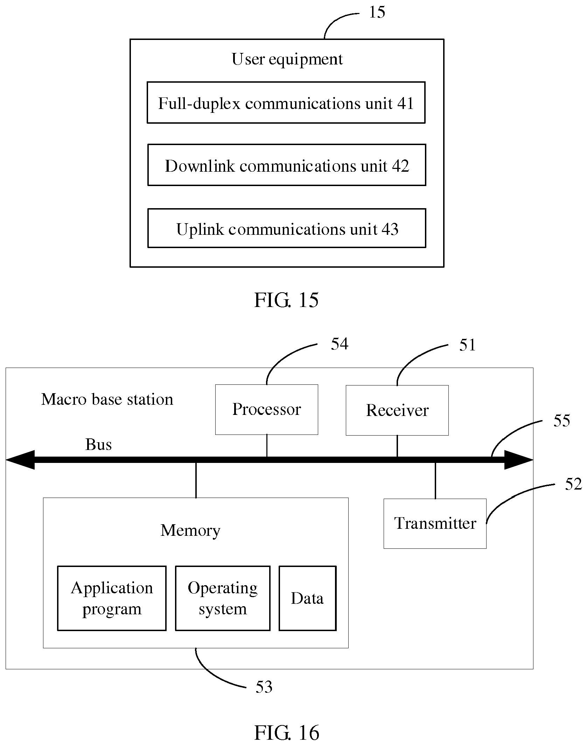

Referring to FIG. 15, an embodiment of the present invention provides user equipment, and the user equipment is applied to a wireless communications system in which a macro cell corresponding to a macro base station includes a small cell corresponding to a pico base station, and is configured to implement the communication method, in the foregoing embodiment, executed by second user equipment served by a pico base station. The macro base station and the pico base station use a same carrier to respectively communicate with user equipment served by the macro base station and user equipment served by the pico base station. The second user equipment includes:
a full-duplex communications unit 41, configured to perform one or more of signal sending or signal reception in a first full-duplex timeslot used by the second user equipment;
a downlink communications unit 42, configured to receive, in a first downlink timeslot used by the second user equipment, a signal sent by the pico base station; and
an uplink communications unit 43, configured to send a signal to the pico base station in a first uplink timeslot used by the second user equipment; where
a starting point and an ending point of an idle timeslot used by the macro base station are aligned with those of the first full-duplex timeslot used by the second user equipment, a starting point of a first downlink timeslot used by the macro base station is aligned with that of the first downlink timeslot used by the second user equipment, and a starting point and an ending point of a first uplink timeslot used by the macro base station are aligned with those of the first uplink timeslot used by the second user equipment.

The second user equipment provided in the foregoing embodiment performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the second user equipment are aligned with those of a first uplink timeslot UL1 used by the macro base station, and a starting point of a first downlink timeslot DL1 used by the second user equipment is aligned with that of a first downlink timeslot DL1 used by the macro base station. Therefore, the second user equipment and the macro base station do not simultaneously send a signal or simultaneously receive a signal at a same time point. Therefore, signal sending by the macro base station does not cause interference to signal reception by a pico base station from the second user equipment, nor is signal reception by the macro base station interfered by a signal sent by the pico base station to the second user equipment.

Optionally, a path loss between the pico base station and the macro base station is less than or equal to a first threshold;
the uplink communications unit 43 is further configured to send a signal to the pico base station in a second uplink timeslot used by the second user equipment; and
the full-duplex communications unit 41 is further configured to perform one or more of signal sending or signal reception in a second full-duplex timeslot used by the second user equipment; where
a starting point and an ending point of the second uplink timeslot used by the second user equipment are aligned with those of a second uplink timeslot used by the macro base station, and a starting point and an ending point of the second full-duplex timeslot used by the second user equipment are aligned with those of a third uplink timeslot used by the macro base station.

The starting point and the ending point of the second uplink timeslot used by the second user equipment are aligned with those of the second uplink timeslot used by the macro base station. Therefore, no interference between communications nodes caused by signal transmission to signal reception exists. However, the starting point and the ending point of the second full-duplex timeslot used by the second user equipment are aligned with those of the third uplink timeslot used by the macro base station. Signal reception by the second user equipment in the second full-duplex timeslot used by the second user equipment causes interference to signal reception by the macro base station. However, full-duplex communication by the pico base station by using the second full-duplex timeslot herein improves carrier utilization.

Optionally, the full-duplex communications unit 41 is further configured to perform one or more of signal sending or signal reception in a second full-duplex timeslot used by the second user equipment; and
the full-duplex communications unit 41 is further configured to perform one or more of signal sending or signal reception in a third full-duplex timeslot used by the second user equipment; where
a starting point and an ending point of the third full-duplex timeslot used by the second user equipment are aligned with those of a second uplink timeslot used by the macro base station, and a starting point and an ending point of the second full-duplex timeslot used by the second user equipment are aligned with those of a third uplink timeslot used by the macro base station.

In the foregoing embodiment, if second user equipment receives a signal in a third full-duplex timeslot and a second full-duplex timeslot used by the second user equipment, when a path loss between a pico base station and the macro base station is less than or equal to a first threshold, signal reception by the macro base station from first user equipment is interfered. However, performing, by the second user equipment, a full-duplex operation in the third full-duplex timeslot and the second full-duplex timeslot used by the second user equipment improves carrier utilization. Alternatively, when a path loss between a pico base station and a macro base station is greater than a first threshold, the interference is acceptable, and in this case, performing, by the second user equipment served by the pico base station, a full-duplex operation in the third full-duplex timeslot and the second full-duplex timeslot used by the second user equipment also improves carrier utilization.

Preferably, when a path loss between the pico base station and the macro base station is less than or equal to a first threshold, the full-duplex communications unit 41 is specifically configured to execute one or more of the following operations: when a traffic volume of to-be-transmitted downlink data is greater than a first downlink traffic volume threshold, and a traffic volume of to-be-transmitted uplink data is less than a second uplink traffic volume threshold, receiving, in a first preset quantity of timeslot resources in the third full-duplex timeslot used by the second user equipment, the to-be-transmitted downlink data sent by the pico base station, where the first preset quantity of timeslot resources are only used to receive a downlink signal; or
when a traffic volume of to-be-transmitted uplink data is greater than a first uplink traffic volume threshold, and a traffic volume of to-be-transmitted downlink data is less than a second downlink traffic volume threshold, sending the to-be-transmitted uplink data to the pico base station in a second preset quantity of timeslot resources in the third full-duplex timeslot used by the second user equipment, where the second preset quantity of timeslot resources are only used to send an uplink signal.

When a traffic volume of to-be-transmitted downlink data is greater than a first downlink traffic volume threshold, and a traffic volume of to-be-transmitted uplink data is less than a second uplink traffic volume threshold, and/or when a traffic volume of to-be-transmitted uplink data is greater than a first uplink traffic volume threshold, and a traffic volume of to-be-transmitted downlink data is less than a second downlink traffic volume threshold, second user equipment served by a pico base station always preferentially schedules transmission in a half-duplex mode. Therefore, uplink signal sending by the second user equipment, served by the pico base station, in a third full-duplex timeslot UL/DL3 does not cause interference to signal reception by a macro base station, so that more resources that may be used to perform a full-duplex operation are reserved, while an interference-optimal principle is considered, for the second user equipment served by the pico base station, which improves spectrum utilization.

Further, the downlink communications unit 42 is specifically configured to: when the traffic volume of the to-be-transmitted downlink data does not exceed the first downlink traffic volume threshold, receive, in the first downlink timeslot used by the second user equipment, the to-be-transmitted downlink data sent by the pico base station.

The uplink communications unit 43 is specifically configured to: when the traffic volume of the to-be-transmitted uplink data does not exceed the first uplink traffic volume threshold, send the to-be-transmitted uplink data in the first uplink timeslot used by the second user equipment.

Herein, when a traffic volume of downlink data does not exceed a first downlink traffic volume threshold, second user equipment served by a pico base station preferentially receives the to-be-transmitted downlink data by using a first downlink timeslot used by the second user equipment; or when a traffic volume of to-be-transmitted uplink data does not exceed a first uplink traffic volume threshold, second user equipment served by a pico base station preferentially sends the to-be-transmitted uplink data by using a first uplink timeslot used by the second user equipment. A first downlink timeslot used by a macro base station falls within the first downlink timeslot used by the second user equipment served by the pico base station, and a starting point and an ending point of a first uplink timeslot used by the macro base station are aligned with those of the first uplink timeslot used by the second user equipment served by the pico base station. Therefore, interference between communications nodes caused by signal transmission to signal reception is avoided.

Referring to FIG. 16, a macro base station is provided, and the macro base station is applied to a wireless communications system in which a macro cell corresponding to the macro base station includes a small cell corresponding to a pico base station, and is configured to implement the foregoing communication method executed by a macro base station. The macro base station and the pico base station use a same carrier to respectively communicate with user equipment served by the macro base station and user equipment served by the pico base station. The macro base station includes a receiver 51, a transmitter 52, a memory 53, a processor 54, and a bus 55. The receiver 51, the transmitter 52, the memory 53, and the processor 54 are connected by using the bus 55, to implement mutual communication, and the memory 53 is configured to store data processed by the processor 54.

The bus 55 may be an Industry Standard Architecture (Industry Standard Architecture, ISA for short) bus, a peripheral component interconnect (Peripheral Component Interconnect, PCI for short) bus, an Extended Industry Standard Architecture (Extended Industry Standard Architecture, EISA for short) bus, and the like, which is not limited herein. The bus 55 may be categorized into an address bus, a data bus, a control bus, and the like. For ease of denotation, the bus 55 is represented by using only one thick line in FIG. 16, which, however, does not indicate that there is only one bus or one type of bus.

The memory 53 is configured to store data or executable program code, where the program code includes a computer operation instruction that may be specifically an operating system, an application program, and the like. The memory 53 may include a high-speed RAM memory, and may further include a non-volatile memory (non-volatile memory) such as at least one disk memory.

The processor 54 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 54 is configured to execute the program code in the memory 53 and perform, by using the receiver 51 and the transmitter 52, signal exchange with the user equipment served by the macro base station, to implement the wireless communication method, in the foregoing embodiment, executed by units. Specifically, the following is included:
the transmitter 52 is configured to send a signal in a first downlink timeslot used by the macro base station; and
the receiver 51 is configured to receive a signal in a first uplink timeslot used by the macro base station; where
a starting point and an ending point of an idle timeslot used by the macro base station are aligned with those of a first full-duplex timeslot used by the pico base station, a starting point of the first downlink timeslot used by the macro base station is aligned with that of a first downlink timeslot used by the pico base station, and a starting point and an ending point of the first uplink timeslot used by the macro base station are aligned with those of a first uplink timeslot used by the pico base station.

The macro base station provided in the foregoing embodiment does not send or receive a signal in an idle timeslot used by the macro base station, and a pico base station performs full-duplex communication in a first full-duplex timeslot corresponding to the idle timeslot used by the macro base station. In addition, a starting point and an ending point of a first uplink timeslot UL1 used by the macro base station are aligned with those of a first uplink timeslot UL1 used by the pico base station, and a starting point of a first downlink timeslot DL1 used by the macro base station is aligned with that of a first downlink timeslot DL1 used by the pico base station. Therefore, the macro base station or the pico base station does not send a signal at a same time point when the other one receives a signal. Therefore, signal sending by the pico base station does not cause interference to signal reception by the macro base station, nor does signal sending by the macro base station cause interference to signal reception by the pico base station.

Optionally, when a path loss between the pico base station and the macro base station is less than or equal to a first threshold, the receiver 51 is further configured to receive a signal in a second uplink timeslot used by the macro base station; and
the receiver 51 is further configured to receive a signal in a third uplink timeslot used by the macro base station.

A starting point and an ending point of the second uplink timeslot used by the macro base station are aligned with those of a second uplink timeslot used by the pico base station. Therefore, no interference between communications nodes caused by signal transmission to signal reception exists. However, a starting point and an ending point of the third uplink timeslot used by the macro base station are aligned with those of a second full-duplex timeslot used by the pico base station. Signal sending by the pico base station in the second full-duplex timeslot used by the pico base station causes interference to signal reception by the macro base station. However, full-duplex communication by the pico base station by using the second full-duplex timeslot herein improves carrier utilization.

Optionally, the receiver 51 is further configured to receive a signal in a second uplink timeslot used by the macro base station; and
the receiver 51 is further configured to receive a signal in a third uplink timeslot used by the macro base station; where
a starting point and an ending point of the second uplink timeslot used by the macro base station are aligned with those of a third full-duplex timeslot used by the pico base station, and a starting point and an ending point of the third uplink timeslot used by the macro base station are aligned with those of a second full-duplex timeslot used by the pico base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station is interfered. However, performing, by the pico base station, a full-duplex operation in the third full-duplex timeslot and the second full-duplex timeslot used by the pico base station improves carrier utilization. Alternatively, when a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

Further, a radio frame used by the macro base station includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1. Alternatively, a radio frame used by the macro base station includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6. For a specific frame structure, reference may be made to embodiments corresponding to FIG. 9, FIG. 10, and FIG. 11, and details are not described herein again.

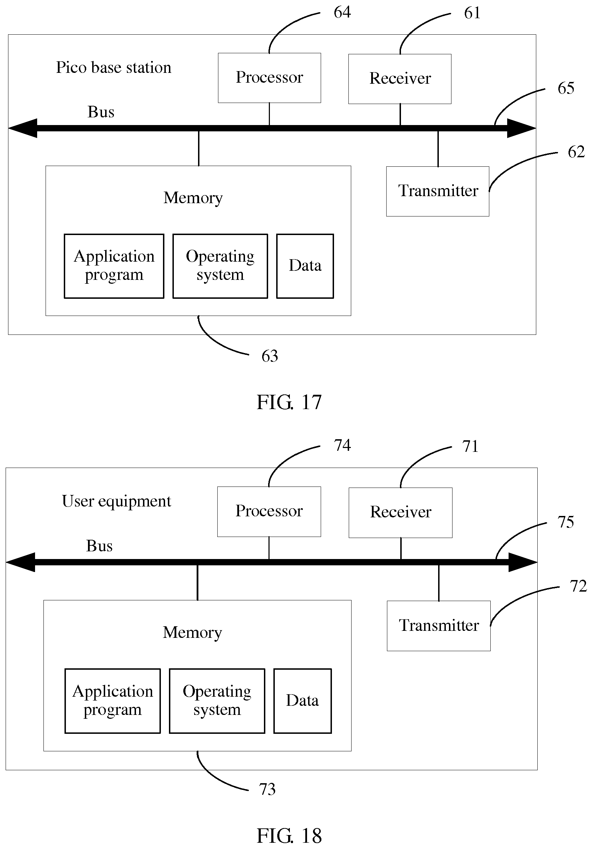

Referring to FIG. 17, a pico base station is provided, and the pico base station is applied to a wireless communications system in which a macro cell corresponding to a macro base station includes a small cell corresponding to the pico base station, and is configured to implement the foregoing communication method executed by a pico base station. The macro base station and the pico base station use a same carrier to respectively communicate with user equipment served by the macro base station and user equipment served by the pico base station. The pico base station includes a receiver 61, a transmitter 62, a memory 63, a processor 64, and a bus 65. The receiver 61, the transmitter 62, the memory 63, and the processor 64 are connected by using the bus 65, to implement mutual communication, and the memory 63 is configured to store data processed by the processor 64.

The bus 65 may be an Industry Standard Architecture (Industry Standard Architecture, ISA for short) bus, a peripheral component interconnect (Peripheral Component Interconnect, PCI for short) bus, an Extended Industry Standard Architecture (Extended Industry Standard Architecture, EISA for short) bus, and the like, which is not limited herein. The bus 65 may be categorized into an address bus, a data bus, a control bus, and the like. For ease of denotation, the bus 65 is represented by using only one thick line in FIG. 17, which, however, does not indicate that there is only one bus or one type of bus.

The memory 63 is configured to store data or executable program code, where the program code includes a computer operation instruction that may be specifically an operating system, an application program, and the like. The memory 63 may include a high-speed RAM memory, and may further include a non-volatile memory (non-volatile memory) such as at least one disk memory.

The processor 64 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 64 is configured to execute the program code in the memory 63 and perform, by using the receiver 61 and the transmitter 62, signal exchange with the user equipment served by the pico base station, to implement the wireless communication method, in the foregoing embodiment, executed by units. Specifically, the following is included:
one or more of the following cases are included in a first full-duplex timeslot used by the pico base station: The transmitter 62 is configured to send a signal in the first full-duplex timeslot used by the pico base station; or the receiver 61 receives a signal in the first full-duplex timeslot used by the pico base station;
the transmitter 62 is configured to send a signal in a first downlink timeslot used by the pico base station; and
the receiver 61 is configured to receive a signal in a first uplink timeslot used by the pico base station; where
a starting point and an ending point of an idle timeslot used by the macro base station are aligned with those of the first full-duplex timeslot used by the pico base station, a starting point of a first downlink timeslot used by the macro base station is aligned with that of the first downlink timeslot used by the pico base station, and a starting point and an ending point of a first uplink timeslot used by the macro base station are aligned with those of the first uplink timeslot used by the pico base station.

The pico base station provided in the foregoing embodiment performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the pico base station are aligned with those of a first uplink timeslot UL1 used by the macro base station, and a starting point of a first downlink timeslot DL1 used by the pico base station is aligned with that of a first downlink timeslot DL1 used by the macro base station. Therefore, one of the pico base station or the macro base station does not send a signal at a same time point when the other one receives a signal. Therefore, signal sending by the pico base station does not cause interference to signal reception by the macro base station, nor does signal sending by the macro base station cause interference to signal reception by the pico base station.

Optionally, a path loss between the pico base station and the macro base station is less than or equal to a first threshold;
the receiver 61 is further configured to receive a signal in a second uplink timeslot used by the pico base station; and
one or more of the following cases are included in a second full-duplex timeslot used by the pico base station: The transmitter 62 sends a signal in the second full-duplex timeslot used by the pico base station; or the receiver 61 receives a signal in the second full-duplex timeslot used by the pico base station; where
a starting point and an ending point of the second uplink timeslot used by the pico base station are aligned with those of a second uplink timeslot used by the macro base station, and a starting point and an ending point of the second full-duplex timeslot used by the pico base station are aligned with those of a third uplink timeslot used by the macro base station.

A starting point and an ending point of the second uplink timeslot used by the pico base station are aligned with those of a second uplink timeslot used by the macro base station. Therefore, no interference between communications nodes caused by signal transmission to signal reception exists. However, a starting point and an ending point of the second full-duplex timeslot used by the pico base station are aligned with those of a third uplink timeslot used by the macro base station. Signal sending by the pico base station in the second full-duplex timeslot used by the pico base station causes interference to signal reception by the macro base station. However, full-duplex communication by the pico base station by using the second full-duplex timeslot herein improves carrier utilization.

Alternatively, one or more of the following cases are included in a second full-duplex timeslot used by the pico base station: The transmitter 62 sends a signal in the second full-duplex timeslot used by the pico base station; or the receiver 61 receives a signal in the second full-duplex timeslot used by the pico base station; and
one or more of the following cases are included in a third full-duplex timeslot used by the pico base station: The transmitter 62 sends a signal in the third full-duplex timeslot used by the pico base station; or the receiver 61 receives a signal in the third full-duplex timeslot used by the pico base station; where
a starting point and an ending point of the third full-duplex timeslot used by the pico base station are aligned with those of a second uplink timeslot used by the macro base station, and a starting point and an ending point of the second full-duplex timeslot used by the pico base station are aligned with those of a third uplink timeslot used by the macro base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station is interfered. However, performing, by the pico base station, a full-duplex operation in the third full-duplex timeslot and the second full-duplex timeslot used by the pico base station improves carrier utilization. When a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

Preferably, when a path loss between the pico base station and the macro base station is less than or equal to a first threshold, one or more of the following cases are specifically included: The transmitter 62 is configured to: when a traffic volume of to-be-transmitted downlink data is greater than a first downlink traffic volume threshold, and a traffic volume of to-be-transmitted uplink data is less than a second uplink traffic volume threshold, send the to-be-transmitted downlink data to the user equipment in a first preset quantity of timeslot resources in the third full-duplex timeslot used by the pico base station, where the first preset quantity of timeslot resources are only used to send a downlink signal; or
the receiver 61 is configured to: when a traffic volume of to-be-transmitted uplink data is greater than a first uplink traffic volume threshold, and a traffic volume of to-be-transmitted downlink data is less than a second downlink traffic volume threshold, receive, in a second preset quantity of timeslot resources in the third full-duplex timeslot used by the pico base station, the to-be-transmitted uplink data sent by the user equipment, where the second preset quantity of timeslot resources are only used to receive an uplink signal.

When a traffic volume of to-be-transmitted downlink data is greater than a first downlink traffic volume threshold, and a traffic volume of to-be-transmitted uplink data is less than a second uplink traffic volume threshold, and/or when a traffic volume of to-be-transmitted uplink data is greater than a first uplink traffic volume threshold, and a traffic volume of to-be-transmitted downlink data is less than a second downlink traffic volume threshold, a pico base station always preferentially schedules transmission in a half-duplex mode. Therefore, uplink signal reception by the pico base station in a third full-duplex timeslot UL/DL3 does not cause interference to signal reception by a macro base station from user equipment, so that more resources that may be used to perform a full-duplex operation are reserved for a pico base station P2 while an interference-optimal principle is considered, which improves spectrum utilization.

Further, the transmitter 62 is specifically configured to: when the traffic volume of the to-be-transmitted downlink data does not exceed the first downlink traffic volume threshold, send the to-be-transmitted downlink data in the first downlink timeslot used by the pico base station.

The receiver 61 is specifically configured to: when the traffic volume of the to-be-transmitted uplink data does not exceed the first uplink traffic volume threshold, receive the to-be-transmitted uplink data in the first uplink timeslot used by the pico base station.

Herein, when a traffic volume of downlink data does not exceed a first downlink traffic volume threshold, a pico base station preferentially sends the to-be-transmitted downlink data by using a first downlink timeslot used by the pico base station; or when a traffic volume of to-be-transmitted uplink data does not exceed a first uplink traffic volume threshold, a pico base station preferentially receives the to-be-transmitted uplink data by using a first uplink timeslot used by the pico base station. A first downlink timeslot used by a macro base station falls within the first downlink timeslot used by the pico base station, and a starting point and an ending point of a first uplink timeslot used by the macro base station are aligned with those of the first uplink timeslot used by the pico base station. Therefore, interference between communications nodes caused by signal transmission to signal reception is avoided.

Further, a radio frame used by the pico base station includes subframes 0 to 9. The first downlink timeslot includes a downlink pilot timeslot in a subframe 1, the first uplink timeslot includes an uplink pilot timeslot in the subframe 1, and a first guard period is set between the downlink pilot timeslot in the subframe 1 and the uplink pilot timeslot in the subframe 1. Alternatively, a radio frame used by the pico base station includes subframes 0 to 9. The first downlink timeslot includes a downlink pilot timeslot in a subframe 6, the first uplink timeslot includes an uplink pilot timeslot in the subframe 6, and a first guard period is set between the downlink pilot timeslot in the subframe 6 and the uplink pilot timeslot in the subframe 6. For a specific frame structure, reference may be made to embodiments corresponding to FIG. 9, FIG. 10, and FIG. 11, and details are not described herein again.

Referring to FIG. 18, user equipment is provided, and the user equipment is applied to a wireless communications system in which a macro cell corresponding to a macro base station includes a small cell corresponding to a pico base station, and is configured to implement the signal transmission method, in the foregoing embodiment, executed by first user equipment served by a macro base station. The macro base station and the pico base station use a same carrier to respectively communicate with user equipment served by the macro base station and user equipment served by the pico base station. The first user equipment includes a receiver 71, a transmitter 72, a memory 73, a processor 74, and a bus 75. The receiver 71, the transmitter 72, the memory 73, and the processor 74 are connected by using the bus 75, to implement mutual communication, and the memory 73 is configured to store data processed by the processor 74.

The bus 75 may be an Industry Standard Architecture (Industry Standard Architecture, ISA for short) bus, a peripheral component interconnect (Peripheral Component Interconnect, PCI for short) bus, an Extended Industry Standard Architecture (Extended Industry Standard Architecture, EISA for short) bus, and the like, which is not limited herein. The bus 75 may be categorized into an address bus, a data bus, a control bus, and the like. For ease of denotation, the bus 75 is represented by using only one thick line in FIG. 18, which, however, does not indicate that there is only one bus or one type of bus.

The memory 73 is configured to store data or executable program code, where the program code includes a computer operation instruction that may be specifically an operating system, an application program, and the like. The memory 73 may include a high-speed RAM memory, and may further include a non-volatile memory (non-volatile memory) such as at least one disk memory.

The processor 74 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 74 is configured to execute the program code in the memory 73 and perform signal exchange with the macro base station by using the receiver 71 and the transmitter 72, to implement the wireless communication method, in the foregoing embodiment, executed by units. Specifically, the following is included:
the receiver 71 is configured to receive, in a first downlink timeslot used by the first user equipment, a signal sent by the macro base station; and
the transmitter 72 is configured to send a signal to the macro base station in a first uplink timeslot used by the first user equipment; where
a starting point and an ending point of an idle timeslot used by the first user equipment are aligned with those of a first full-duplex timeslot used by the pico base station, a starting point of the first downlink timeslot used by the first user equipment is aligned with that of a first downlink timeslot used by the pico base station, and a starting point and an ending point of the first uplink timeslot used by the first user equipment are aligned with those of a first uplink timeslot used by the pico base station.

The first user equipment provided in the foregoing embodiment does not perform signal transmission with a macro base station in an idle timeslot used by the first user equipment, and a pico base station performs full-duplex communication in a first full-duplex timeslot corresponding to the idle timeslot used by the first user equipment. In addition, a starting point and an ending point of a first uplink timeslot UL1 used by the first user equipment are aligned with those of a first uplink timeslot UL1 used by the pico base station, and a starting point of a first downlink timeslot DL1 used by the first user equipment is aligned with that of a first downlink timeslot DL1 used by the pico base station. Therefore, the first user equipment and the pico base station do not simultaneously send a signal or simultaneously receive a signal at a same time point. Therefore, signal sending by the pico base station does not cause interference to signal reception by the macro base station from the first user equipment, nor is signal reception by the pico base station interfered by a signal sent by the macro base station to the first user equipment.

Further, one or more of the following operations are executed in the idle timeslot used by the first user equipment: The transmitter 72 sends a signal in a device-to-device D2D communication manner in the idle timeslot used by the first user equipment; or the receiver 71 receives a signal in a device-to-device D2D communication manner in the idle timeslot used by the first user equipment.

Herein, the macro base station does not use an idle timeslot to perform signal transmission, but the first user equipment performs signal transmission in a device-to-device D2D communication manner in the idle timeslot used by the first user equipment. Therefore, carrier spectrum utilization is improved.

Optionally, when a path loss between the pico base station and the macro base station is less than or equal to a first threshold, the transmitter 72 is further configured to send a signal to the macro base station in a second uplink timeslot used by the first user equipment; and
the transmitter 72 is further configured to send a signal to the macro base station in a third uplink timeslot used by the first user equipment; where
a starting point and an ending point of the second uplink timeslot used by the first user equipment are aligned with those of a second uplink timeslot used by the pico base station, and a starting point and an ending point of the third uplink timeslot used by the first user equipment are aligned with those of a second full-duplex timeslot used by the pico base station.

The starting point and the ending point of the second uplink timeslot used by the first user equipment are aligned with those of the second uplink timeslot used by the pico base station. Therefore, no interference between communications nodes caused by signal transmission to signal reception exists. However, the starting point and the ending point of the third uplink timeslot used by the first user equipment are aligned with those of the second full-duplex timeslot used by the pico base station. Signal sending by the pico base station in the second full-duplex timeslot used by the pico base station causes interference to signal reception by the macro base station. However, full-duplex communication by the pico base station by using the second full-duplex timeslot herein improves carrier utilization.

Optionally, the transmitter 72 is further configured to send a signal to the macro base station in a second uplink timeslot used by the first user equipment; and
the transmitter 72 is further configured to send a signal to the macro base station in a third uplink timeslot used by the first user equipment; where
a starting point and an ending point of the second uplink timeslot used by the first user equipment are aligned with those of a third full-duplex timeslot used by the pico base station, and a starting point and an ending point of the third uplink timeslot used by the first user equipment are aligned with those of a second full-duplex timeslot used by the pico base station.

In the foregoing embodiment, if a pico base station sends a signal in a third full-duplex timeslot and a second full-duplex timeslot used by the pico base station, when a path loss between the pico base station and the macro base station is less than or equal to a first threshold, signal reception by the macro base station from first user equipment is interfered. However, performing, by the pico base station, a full-duplex operation in the third full-duplex timeslot and the second full-duplex timeslot used by the pico base station improves carrier utilization. Alternatively, when a path loss between the pico base station and a macro base station is greater than a first threshold, the interference is acceptable, and in this case, performing, by the pico base station, a full-duplex operation in the third full-duplex timeslot and the second full-duplex timeslot used by the pico base station also improves carrier utilization.

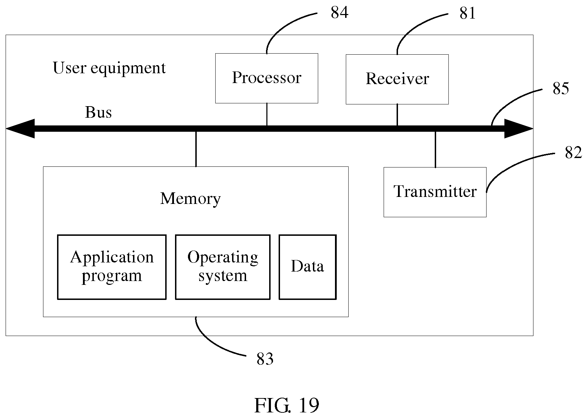

Referring to FIG. 19, an embodiment of the present invention provides user equipment, and the user equipment is applied to a wireless communications system in which a macro cell corresponding to a macro base station includes a small cell corresponding to a pico base station, and is configured to implement the communication method, in the foregoing embodiment, executed by second user equipment served by a pico base station. The macro base station and the pico base station use a same carrier to respectively communicate with user equipment served by the macro base station and user equipment served by the pico base station. The second user equipment includes a receiver 81, a transmitter 82, a memory 83, a processor 84, and a bus 85. The receiver 81, the transmitter 82, the memory 83, and the processor 84 are connected by using the bus 85, to implement mutual communication, and the memory 83 is configured to store data processed by the processor 84.

The bus 85 may be an Industry Standard Architecture (Industry Standard Architecture, ISA for short) bus, a peripheral component interconnect (Peripheral Component Interconnect, PCI for short) bus, an Extended Industry Standard Architecture (Extended Industry Standard Architecture, EISA for short) bus, and the like, which is not limited herein. The bus 85 may be categorized into an address bus, a data bus, a control bus, and the like. For ease of denotation, the bus 85 is represented by using only one thick line in FIG. 19, which, however, does not indicate that there is only one bus or one type of bus.

The memory 83 is configured to store data or executable program code, where the program code includes a computer operation instruction that may be specifically an operating system, an application program, and the like. The memory 83 may include a high-speed RAM memory, and may further include a non-volatile memory (non-volatile memory) such as at least one disk memory.

The processor 84 may be a central processing unit (Central Processing Unit, CPU for short), or an application-specific integrated circuit (Application Specific Integrated Circuit, ASIC for short), or one or more integrated circuits configured to implement this embodiment of the present invention.

The processor 84 is configured to execute the program code in the memory 83 and perform signal exchange with the pico base station by using the receiver 81 and the transmitter 82, to implement the wireless communication method, in the foregoing embodiment, executed by units. Specifically, the following is included:
one or more of the following cases are included in a first full-duplex timeslot used by the second user equipment: The transmitter 82 sends a signal in the first full-duplex timeslot used by the second user equipment; or the receiver 81 receives a signal in the first full-duplex timeslot used by the second user equipment;
the receiver 81 is configured to receive, in a first downlink timeslot used by the second user equipment, a signal sent by the pico base station; and
the transmitter 82 is configured to send a signal to the pico base station in a first uplink timeslot used by the second user equipment; where
a starting point and an ending point of an idle timeslot used by the macro base station are aligned with those of the first full-duplex timeslot used by the second user equipment, a starting point of a first downlink timeslot used by the macro base station is aligned with that of the first downlink timeslot used by the second user equipment, and a starting point and an ending point of a first uplink timeslot used by the macro base station are aligned with those of the first uplink timeslot used by the second user equipment.

The second user equipment provided in the foregoing embodiment performs full-duplex communication in a first full-duplex timeslot corresponding to an idle timeslot used by a macro base station, and the macro base station does not send or receive a signal in the idle timeslot used by the macro base station. In addition, a starting point and an ending point of a first uplink timeslot UL1 used by the second user equipment are aligned with those of a first uplink timeslot UL1 used by the macro base station, and a starting point of a first downlink timeslot DL1 used by the second user equipment is aligned with that of a first downlink timeslot DL1 used by the macro base station. Therefore, the second user equipment and the macro base station do not simultaneously send a signal or simultaneously receive a signal at a same time point. Therefore, signal sending by the macro base station does not cause interference to signal reception by a pico base station from the second user equipment, nor is signal reception by the macro base station interfered by a signal sent by the pico base station to the second user equipment.

Optionally, a path loss between the pico base station and the macro base station is less than or equal to a first threshold;
the transmitter 82 is further configured to send a signal to the pico base station in a second uplink timeslot used by the second user equipment; and
one or more of the following cases are included in a second full-duplex timeslot used by the second user equipment: The transmitter 82 sends a signal in the second full-duplex timeslot used by the second user equipment; or the receiver 81 receives a signal in the second full-duplex timeslot used by the second user equipment; where
a starting point and an ending point of the second uplink timeslot used by the second user equipment are aligned with those of a second uplink timeslot used by the macro base station, and a starting point and an ending point of the second full-duplex timeslot used by the second user equipment are aligned with those of a third uplink timeslot used by the macro base station.

The starting point and the ending point of the second uplink timeslot used by the second user equipment are aligned with those of the second uplink timeslot used by the macro base station. Therefore, no interference between communications nodes caused by signal transmission to signal reception exists. However, the starting point and the ending point of the second full-duplex timeslot used by the second user equipment are aligned with those of the third uplink timeslot used by the macro base station. Signal reception by the second user equipment in the second full-duplex timeslot used by the second user equipment causes interference to signal reception by the macro base station. However, full-duplex communication by the pico base station by using the second full-duplex timeslot herein improves carrier utilization.

Optionally, one or more of the following cases are included in a second full-duplex timeslot used by the second user equipment: The transmitter 82 sends a signal in the second full-duplex timeslot used by the second user equipment; or the receiver 81 receives a signal in the second full-duplex timeslot used by the second user equipment; and
one or more of the following operations are included in a third full-duplex timeslot used by the second user equipment: The transmitter 82 sends a signal in the third full-duplex timeslot used by the second user equipment; or the receiver 81 receives a signal in the third full-duplex timeslot used by the second user equipment; where
a starting point and an ending point of the third full-duplex timeslot used by the second user equipment are aligned with those of a second uplink timeslot used by the macro base station, and a starting point and an ending point of the second full-duplex timeslot used by the second user equipment are aligned with those of a third uplink timeslot used by the macro base station.

In the foregoing embodiment, if second user equipment receives a signal in a third full-duplex timeslot and a second full-duplex timeslot used by the second user equipment, when a path loss between a pico base station and the macro base station is less than or equal to a first threshold, signal reception by the macro base station is interfered. However, performing, by the second user equipment, a full-duplex operation in the third full-duplex timeslot and the second full-duplex timeslot used by the second user equipment improves carrier utilization. Alternatively, when a path loss between a pico base station and a macro base station is greater than a first threshold, the interference is acceptable, and in this case, performing, by the second user equipment served by the pico base station, a full-duplex operation in the third full-duplex timeslot and the second full-duplex timeslot used by the second user equipment also improves carrier utilization.

Preferably, when a path loss between the pico base station and the macro base station is less than or equal to a first threshold, one or more of the following cases are specifically included: The receiver 81 is configured to: when a traffic volume of to-be-transmitted downlink data is greater than a first downlink traffic volume threshold, and a traffic volume of to-be-transmitted uplink data is less than a second uplink traffic volume threshold, receive, in a first preset quantity of timeslot resources in the third full-duplex timeslot used by the second user equipment, the to-be-transmitted downlink data sent by the pico base station, where the first preset quantity of timeslot resources are only used to receive a downlink signal; or
the transmitter 82 is configured to: when a traffic volume of to-be-transmitted uplink data is greater than a first uplink traffic volume threshold, and a traffic volume of to-be-transmitted downlink data is less than a second downlink traffic volume threshold, send the to-be-transmitted uplink data to the pico base station in a second preset quantity of timeslot resources in the third full-duplex timeslot used by the second user equipment, where the second preset quantity of timeslot resources are only used to send an uplink signal.

When a traffic volume of to-be-transmitted downlink data is greater than a first downlink traffic volume threshold, and a traffic volume of to-be-transmitted uplink data is less than a second uplink traffic volume threshold, and/or when a traffic volume of to-be-transmitted uplink data is greater than a first uplink traffic volume threshold, and a traffic volume of to-be-transmitted downlink data is less than a second downlink traffic volume threshold, second user equipment served by a pico base station always preferentially schedules transmission in a half-duplex mode. Therefore, uplink signal sending by the second user equipment, served by the pico base station, in a third full-duplex timeslot UL/DL3 does not cause interference to signal reception by a macro base station, so that more resources that may be used to perform a full-duplex operation are reserved, while an interference-optimal principle is considered, for the second user equipment served by the pico base station, which improves spectrum utilization.

Further, the receiver 81 is specifically configured to: when the traffic volume of the to-be-transmitted downlink data does not exceed the first downlink traffic volume threshold, receive, in the first downlink timeslot used by the second user equipment, the to-be-transmitted downlink data sent by the pico base station.

The transmitter 82 is specifically configured to: when the traffic volume of the to-be-transmitted uplink data does not exceed the first uplink traffic volume threshold, send the to-be-transmitted uplink data in the first uplink timeslot used by the second user equipment.

Herein, when a traffic volume of downlink data does not exceed a first downlink traffic volume threshold, second user equipment served by a pico base station preferentially receives the to-be-transmitted downlink data by using a first downlink timeslot used by the second user equipment; or when a traffic volume of to-be-transmitted uplink data does not exceed a first uplink traffic volume threshold, second user equipment served by a pico base station preferentially sends the to-be-transmitted uplink data by using a first uplink timeslot used by the second user equipment. A first downlink timeslot used by a macro base station falls within the first downlink timeslot used by the second user equipment served by the pico base station, and a starting point and an ending point of a first uplink timeslot used by the macro base station are aligned with those of the first uplink timeslot used by the second user equipment served by the pico base station. Therefore, interference from signal sending by the pico base station to signal reception by the macro base station from first user equipment is avoided to the greatest extent.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A wireless communication method, applied to a wireless communications system in which a macro cell corresponding to a macro base station (12) comprises a small cell corresponding to a pico base station (13), wherein the macro base station and the pico base station use a same carrier to respectively communicate with user equipment (14) served by the macro base station and user equipment served by the pico base station, and the method comprises:
sending (S101), by the macro base station, a signal in a first downlink timeslot used by the macro base station;
receiving (S102), by the macro base station, a signal in a first uplink timeslot used by the macro base station; and
skipping sending and receiving, by the macro base station, a signal in an idle timeslot used by the macro base station;
wherein, the method further comprises:
performing (S301), by the pico base station, one or more of signal sending or signal reception in the first full-duplex timeslot used by the pico base station, wherein the full-duplex communication permits the pico base station to perform simultaneous sending and reception operations on a same radio channel;
sending (S302), by the pico base station, a signal in the first downlink timeslot used by the pico base station; and
receiving (S303), by the pico base station, a signal in the first uplink timeslot used by the pico base station; wherein
a starting point and an ending point of an idle timeslot used by the macro base station are aligned with those of the first full-duplex timeslot used by the pico base station, a starting point of a first downlink timeslot used by the macro base station is aligned with that of the first downlink timeslot used by the pico base station, and a starting point and an ending point of a first uplink timeslot used by the macro base station are aligned with those of the first uplink timeslot used by the pico base station.

2. The method according to claim 1, wherein when a path loss between the pico base station (13) and the macro base station (12) is less than or equal to a first threshold, the method further comprises:
receiving, by the macro base station, a signal in a second uplink timeslot used by the macro base station; and
receiving, by the macro base station, a signal in a third uplink timeslot used by the macro base station; wherein
a starting point and an ending point of the second uplink timeslot used by the macro base station are aligned with those of a second uplink timeslot used by the pico base station, and a starting point and an ending point of the third uplink timeslot used by the macro base station are aligned with those of a second full-duplex timeslot used by the pico base station.

3. The method according to claim 1, wherein when a path loss between the pico base station (13) and the macro base station (12) is greater than a first threshold, the method further comprises:
receiving, by the macro base station, a signal in a second uplink timeslot used by the macro base station; and
receiving, by the macro base station, a signal in a third uplink timeslot used by the macro base station; wherein
a starting point and an ending point of the second uplink timeslot used by the macro base station are aligned with those of a third full-duplex timeslot used by the pico base station, and a starting point and an ending point of the third uplink timeslot used by the macro base station are aligned with those of a second full-duplex timeslot used by the pico base station.

4. The method according to claim 1, wherein when a path loss between the pico base station (13) and the macro base station (12) is less than or equal to a first threshold, and the method further comprises:
receiving, by the pico base station, a signal in a second uplink timeslot used by the pico base station; and
performing, by the pico base station, one or more of signal sending or signal reception in a second full-duplex timeslot used by the pico base station; wherein
a starting point and an ending point of the second uplink timeslot used by the pico base station are aligned with those of a second uplink timeslot used by the macro base station, and a starting point and an ending point of the second full-duplex timeslot used by the pico base station are aligned with those of a third uplink timeslot used by the macro base station.

5. The method according to claim 1, wherein when a path loss between the pico base station (13) and the macro base station (12) is greater than a first threshold, the method further comprises:
performing, by the pico base station, one or more of signal sending or signal reception in a second full-duplex timeslot used by the pico base station; and
performing, by the pico base station, one or more of signal sending or signal reception in a third full-duplex timeslot used by the pico base station; wherein
a starting point and an ending point of the third full-duplex timeslot used by the pico base station are aligned with those of a second uplink timeslot used by the macro base station, and a starting point and an ending point of the second full-duplex timeslot used by the pico base station are aligned with those of a third uplink timeslot used by the macro base station.

6. The method according to claim 1, wherein the method further comprises:
receiving, by a first user equipment (14) in a first downlink timeslot used by the first user equipment, a signal sent by the macro base station (12); and
sending, by the first user equipment, a signal to the macro base station in a first uplink timeslot used by the first user equipment; wherein
a starting point and an ending point of an idle timeslot used by the first user equipment are aligned with those of the first full-duplex timeslot used by the pico base station, a starting point of the first downlink timeslot used by the first user equipment is aligned with that of the first downlink timeslot used by the pico base station (13), a starting point and an ending point of the first uplink timeslot used by the first user equipment are aligned with those of the first uplink timeslot used by the pico base station, and the first user equipment is user equipment served by the macro base station.

7. The method according to any claim 1, wherein the method further comprises:
performing (S401), by a second user equipment (15), one or more of signal sending or signal reception in a first full-duplex timeslot used by the second user equipment;
receiving (S402), by the second user equipment in a first downlink timeslot used by the second user equipment, a signal sent by the pico base station (13); and
sending (S403), by the second user equipment, a signal to the pico base station in a first uplink timeslot used by the second user equipment; wherein
a starting point and an ending point of the idle timeslot used by the macro base station (12) are aligned with those of the first full-duplex timeslot used by the second user equipment, a starting point of the first downlink timeslot used by the macro base station is aligned with that of the first downlink timeslot used by the second user equipment, a starting point and an ending point of the first uplink timeslot used by the macro base station are aligned with those of the first uplink timeslot used by the second user equipment, and the second user equipment is user equipment served by the pico base station.

8. A wireless communications system comprising a macro base station (12) and a pico base station (13), wherein a macro cell corresponding to the macro base station comprises a small cell corresponding to the pico base station, wherein the macro base station and the pico base station use a same carrier to respectively communicate with user equipment (14) served by the macro base station and user equipment served by the pico base station, and the macro base station comprises:
a downlink communications unit (11), configured to send a signal in a first downlink timeslot used by the macro base station; and
an uplink communications unit (12), configured to receive a signal in a first uplink timeslot used by the macro base station;
and wherein, the pico base station comprises:
a full-duplex communications unit (21), configured to perform one or more of signal sending or signal reception in a first full-duplex timeslot used by the pico base station, wherein the full-duplex communication permits the pico base station to perform simultaneous sending and reception operations on a same radio channel;
a downlink communications unit (22), configured to send a signal in a first downlink timeslot used by the pico base station; and
an uplink communications unit (23), configured to receive a signal in a first uplink timeslot used by the pico base station; wherein
a starting point and an ending point of an idle timeslot used by the macro base station are aligned with those of the first full-duplex timeslot used by the pico base station, a starting point of a first downlink timeslot used by the macro base station is aligned with that of the first downlink timeslot used by the pico base station, and a starting point and an ending point of a first uplink timeslot used by the macro base station are aligned with those of the first uplink timeslot used by the pico base station.

9. The wireless communications system according to claim 8, wherein when a path loss between the pico base station (13) and the macro base station (12) is less than or equal to a first threshold, the uplink communications unit (12) of the macro base station is further configured to receive a signal in a second uplink timeslot used by the macro base station; and
the uplink communications unit in the macro base station is further configured to receive a signal in a third uplink timeslot used by the macro base station; wherein
a starting point and an ending point of the second uplink timeslot used by the macro base station are aligned with those of a second uplink timeslot used by the pico base station, and a starting point and an ending point of the third uplink timeslot used by the macro base station are aligned with those of a second full-duplex timeslot used by the pico base station.

10. The wireless communications system according to claim 8, wherein when a path loss between the pico base station (13) and the macro base station (12) is greater than a first threshold:
the uplink communications unit (12) in the macro base station is further configured to receive a signal in a second uplink timeslot used by the macro base station; and
the uplink communications unit in the macro base station is further configured to receive a signal in a third uplink timeslot used by the macro base station; wherein
a starting point and an ending point of the second uplink timeslot used by the macro base station are aligned with those of a third full-duplex timeslot used by the pico base station, and a starting point and an ending point of the third uplink timeslot used by the macro base station are aligned with those of a second full-duplex timeslot used by the pico base station.

11. The wireless communications system according to claim 8, wherein when a path loss between the pico base station (13) and the macro base station (12) is less than or equal to a first threshold;
the uplink communications unit (23) in the pico base station is further configured to receive a signal in a second uplink timeslot used by the pico base station; and
the full-duplex communications unit (23) in the pico base station is further configured to perform one or more of signal sending or signal reception in a second full-duplex timeslot used by the pico base station; wherein
a starting point and an ending point of the second uplink timeslot used by the pico base station are aligned with those of a second uplink timeslot used by the macro base station, and a starting point and an ending point of the second full-duplex timeslot used by the pico base station are aligned with those of a third uplink timeslot used by the macro base station.

12. The wireless communications system according to claim 8, wherein when a path loss between the pico base station (13) and the macro base station (12) is greater than a first threshold:
the full-duplex communications unit (21) is further configured to perform one or more of signal sending or signal reception in a second full-duplex timeslot used by the pico base station; and
the full-duplex communications unit is further configured to perform one or more of signal sending or signal reception in a third full-duplex timeslot used by the pico base station; wherein
a starting point and an ending point of the third full-duplex timeslot used by the pico base station are aligned with those of a second uplink timeslot used by the macro base station, and a starting point and an ending point of the second full-duplex timeslot used by the pico base station are aligned with those of a third uplink timeslot used by the macro base station.

13. The wireless communications system according to claim 8 further comprising a first user equipment (14) served by the macro base station (12), wherein the first user equipment comprises:
a downlink communications unit (31), configured to receive, in a first downlink timeslot used by the first user equipment, a signal sent by the macro base station; and
an uplink communications unit (32), configured to send a signal to the macro base station in a first uplink timeslot used by the first user equipment; wherein
a starting point and an ending point of an idle timeslot used by the first user equipment are aligned with those of the first full-duplex timeslot used by the pico base station, a starting point of the first downlink timeslot used by the first user equipment is aligned with that of the first downlink timeslot used by the pico base station, and a starting point and an ending point of the first uplink timeslot used by the first user equipment are aligned with those of the first uplink timeslot used by the pico base station.

14. The wireless communications system according to claim 8 further comprising a second user equipment (15) served by the pico base station (13), wherein the second user equipment comprises:
a full-duplex communications unit (41), configured to perform one or more of signal sending or signal reception in a first full-duplex timeslot used by the second user equipment;
a downlink communications unit (42), configured to receive, in a first downlink timeslot used by the second user equipment, a signal sent by the pico base station; and
an uplink communications unit (43), configured to send a signal to the pico base station in a first uplink timeslot used by the second user equipment; wherein
a starting point and an ending point of the idle timeslot used by the macro base station are aligned with those of the first full-duplex timeslot used by the second user equipment, a starting point of the first downlink timeslot used by the macro base station is aligned with that of the first downlink timeslot used by the second user equipment, and a starting point and an ending point of the first uplink timeslot used by the macro base station are aligned with those of the first uplink timeslot used by the second user equipment.

## Patentansprüche

1. Drahtloses Kommunikationsverfahren, das auf ein drahtloses Kommunikationssystem angewendet wird, bei dem eine Makrozelle, die einer Makro-Basisstation (12) entspricht, eine kleine Zelle umfasst, die einer Pico-Basisstation (13) entspricht, wobei die Makro-Basisstation und die Pico-Basisstation einen gleichen Träger verwenden, um jeweils mit der von der Makro-Basisstation versorgten Benutzerausrüstung (14) und der von der Pico-Basisstation versorgten Benutzerausrüstung zu kommunizieren, und wobei das Verfahren Folgendes umfasst:
das Senden (S101) durch die Makro-Basisstation eines Signals in einem ersten Downlink-Zeitschlitz, der von der Makro-Basisstation verwendet wird;
das Empfangen (S102) durch die Makro-Basisstation eines Signals in einem von der Makro-Basisstation verwendeten ersten Uplink-Zeitschlitz; und
das Überspringen des Sendens und des Empfangens durch die Makro-Basisstation eines von der Makro-Basisstation verwendeten Signals in einem inaktiven Zeitschlitz;
wobei das Verfahren ferner Folgendes umfasst:
das Durchführen (S301) durch die Pico-Basisstation eines oder mehrerer Signalsende- oder Signalempfangsvorgänge in dem ersten Vollduplex-Zeitschlitz, der von der Pico-Basisstation verwendet wird, wobei die Vollduplex-Kommunikation der Pico-Basisstation ermöglicht, simultane Sende- und Empfangsvorgänge auf demselben Funkkanal durchzuführen;
das Senden (S302) durch die Pico-Basisstation eines Signals in dem ersten Downlink-Zeitschlitz, ders von der Pico-Basisstation verwendet wird; und
das Empfangen (S303) durch die Pico-Basisstation eines Signals in dem ersten Uplink-Zeitschlitz, der von der Pico-Basisstation verwendet wird;
wobei ein Startpunkt und ein Endpunkt eines inaktiven Zeitschlitzes, der von der Makro-Basisstation verwendet wird, mit denen des ersten Vollduplex-Zeitschlitzes, der von der Pico-Basisstation verwendet wird, ausgerichtet sind, wobei ein Startpunkt eines ersten Downlink-Zeitschlitzes, der von der Makro-Basisstation verwendet wird, mit dem ersten Downlink-Zeitschlitz, der von der Pico-Basisstation verwendet wird, ausgerichtet wird, und wobei ein Startpunkt und ein Endpunkt eines ersten Uplink-Zeitschlitzes, der von der Makro-Basisstation verwendet wird, mit denen des ersten Uplink-Zeitschlitzes, der von der Pico-Basisstation verwendet wird, ausgerichtet sind.

2. Verfahren nach Anspruch 1, wobei, wenn ein Wegverlust zwischen der Pico-Basisstation (13) und der Makro-Basisstation (12) kleiner oder gleich einem ersten Schwellenwert ist, das Verfahren Folgendes umfasst:
das Empfangen durch die Makro-Basisstation eines Signals in einem zweiten Uplink-Zeitschlitz, der von der Makro-Basisstation verwendet wird; und
das Empfangen durch die Makro-Basisstation eines Signals in einem dritten Uplink-Zeitschlitz, der von der Makro-Basisstation verwendet wird;
wobei ein Startpunkt und ein Endpunkt des zweiten Uplink-Zeitschlitzes, der von der Makro-Basisstation verwendet wird, mit denen eines zweiten Uplink-Zeitschlitzes, der von der Pico-Basisstation verwendet wird, ausgerichtet sind, und ein Startpunkt und ein Endpunkt des dritten Uplink-Zeitschlitzes, der von der Makro-Basisstation verwendet wird, mit denen eines zweiten Vollduplex-Zeitschlitzes, der von der Pico-Basisstation verwendet wird, ausgerichtet sind.

3. Verfahren nach Anspruch 1, wobei, wenn ein Wegverlust zwischen der Pico-Basisstation (13) und der Makro-Basisstation (12) größer als ein erster Schwellenwert ist, das Verfahren Folgendes umfasst:
das Empfangen durch die Makro-Basisstation eines Signals in einem zweiten Uplink-Zeitschlitz, der von der Makro-Basisstation verwendet wird; und
das Empfangen durch die Makro-Basisstation eines Signals in einem dritten Uplink-Zeitschlitz, der von der Makro-Basisstation verwendet wird;
wobei ein Startpunkt und ein Endpunkt des zweiten Uplink-Zeitschlitzes, der von der Makro-Basisstation verwendet wird, mit denen eines dritten Uplink-Zeitschlitzes, der von der Pico-Basisstation verwendet wird, ausgerichtet sind, und ein Startpunkt und ein Endpunkt des dritten Uplink-Zeitschlitzes, der von der Makro-Basisstation verwendet wird, mit denen eines zweiten Vollduplex-Zeitschlitzes, der von der der Pico-Basisstation verwendet wird, ausgerichtet sind.

4. Verfahren nach Anspruch 1, wobei, wenn ein Wegverlust zwischen der Pico-Basisstation (13) und der Makro-Basisstation (12) kleiner oder gleich einem ersten Schwellenwert ist, und das Verfahren Folgendes umfasst:
das Empfangen durch die Pico-Basisstation eines Signals in einem zweiten Uplink-Zeitschlitz, der von der Pico-Basisstation verwendet wird; und
das Durchführen durch die Pico-Basisstation eines oder mehrerer Signalsende- oder Signalempfangsvorgänge in einem zweiten Vollduplex-Zeitschlitz, der von der Pico-Basisstation verwendet wird;
wobei ein Startpunkt und ein Endpunkt des zweiten Uplink-Zeitschlitzes, der von der Pico-Basisstation verwendet wird, mit denen eines zweiten Uplink-Zeitschlitzes, der von der Makro-Basisstation verwendet wird, ausgerichtet sind, und ein Startpunkt und ein Endpunkt des zweiten Vollduplex-Zeitschlitzes, der von der Pico-Basisstation verwendet wird, mit denen eines dritten Uplink-Zeitschlitzes, der von der Makro-Basisstation verwendet wird, ausgerichtet sind.

5. Verfahren nach Anspruch 1, wobei, wenn ein Wegverlust zwischen der Pico-Basisstation (13) und der Makro-Basisstation (12) größer als ein erster Schwellenwert ist, das Verfahren Folgendes umfasst:
das Durchführen durch die Pico-Basisstation eines oder mehrerer Signalsende- oder Signalempfangsvorgänge in einem zweiten Vollduplex-Zeitschlitz, der von der Pico-Basisstation verwendet wird; und
das Durchführen durch die Pico-Basisstation eines oder mehrerer Signalsende- oder Signalempfangsvorgänge in einem dritten Vollduplex-Zeitschlitz, der von der Pico-Basisstation verwendet wird;
wobei ein Startpunkt und ein Endpunkt des dritten Vollduplex-Zeitschlitzes, der von der Pico-Basisstation verwendet wird, mit denen eines zweiten Uplink-Zeitschlitzes, der von der Makro-Basisstation verwendet wird, ausgerichtet sind, und ein Startpunkt und ein Endpunkt des zweiten Vollduplex-Zeitschlitzes, der von der Pico-Basisstation verwendet wird, mit denen eines dritten Uplink-Zeitschlitzes, der von der Makro-Basisstation verwendet wird, ausgerichtet sind.

6. Verfahren nach Anspruch 1, wobei das Verfahren ferner Folgendes umfasst:
das Empfangen durch eine erste Benutzerausrüstung (14) in einem ersten Downlink-Zeitschlitz, der von der ersten Benutzerausrüstung verwendet wird, eines Signals, das von der Makro-Basisstation (12) gesendeten wird; und
das Senden durch die erste Benutzerausrüstung eines Signals an die Makro-Basisstation in einem ersten Uplink-Zeitschlitz, der von der ersten Benutzerausrüstung verwendet wird;
wobei ein Startpunkt und ein Endpunkt eines inaktiven Zeitschlitzes, der von der ersten Benutzerausrüstung verwendet wird, mit denen des ersten Vollduplex-Zeitschlitzes, der von der Pico-Basisstation verwendet wird, ausgerichtet sind, wobei ein Startpunkt des ersten Downlink-Zeitschlitzes, der von der ersten Benutzerausrüstung verwendet wird, mit dem des ersten Downlink-Zeitschlitzes, der von der Pico-Basisstation (13) verwendet wird, ausgerichtet ist, wobei ein Startpunkt und ein Endpunkt des ersten Uplink-Zeitschlitzes, der von der ersten Benutzerausrüstung verwendet wird, mit denen des ersten Uplink-Zeitschlitzes, der von der Pico-Basisstation verwendet wird, ausgerichtet sind, und wobei die erste Benutzerausrüstung eine Benutzerausrüstung ist, die von der Makro-Basisstation bedient wird.

7. Verfahren nach Anspruch 1, wobei das Verfahren ferner Folgendes umfasst:
das Durchführen (S401) durch eine zweite Benutzerausrüstung (15) eines oder mehrerer Signalsende- oder Signalempfangsvorgänge in einem ersten Vollduplex-Zeitschlitz, der von der zweiten Benutzerausrüstung verwendet wird;
das Empfangen (S402) durch die zweite Benutzerausrüstung in einem ersten Downlink-Zeitschlitz, der von der zweiten Benutzerausrüstung verwendet wird, eines Signals, das von der Pico-Basisstation (13) gesendet wird; und
das Senden (S403) durch die zweite Benutzerausrüstung eines Signals an die Pico-Basisstation in einem ersten Uplink-Zeitschlitz, der von der zweiten Benutzerausrüstung verwendet wird;
wobei ein Startpunkt und ein Endpunkt des inaktiven Zeitschlitzes, der von der Makro-Basisstation (12) verwendet wird, mit denen des ersten Vollduplex-Zeitschlitzes, der von der zweiten Benutzerausrüstung verwendet wird, ausgerichtet sind, wobei ein Startpunkt des ersten Downlink-Zeitschlitzes, der von der Makro-Basisstation verwendet wird, mit dem des ersten Downlink-Zeitschlitzes, der von der zweiten Benutzerausrüstung verwendet wird, ausgerichtet ist, wobei ein Startpunkt und ein Endpunkt des ersten Uplink-Zeitschlitzes, der von der Makro-Basisstation verwendet wird, mit denen des ersten Uplink-Zeitschlitzes, der von der zweiten Benutzerausrüstung verwendet wird, ausgerichtet sind, und die zweite Benutzerausrüstung eine Benutzerausrüstung ist, die von der Pico-Basisstation bedient wird.

8. Drahtloses Kommunikationssystem, umfassend eine Makro-Basisstation (12) und eine Pico-Basisstation (13), wobei eine Makrozelle, die der Makro-Basisstation entspricht, eine kleine Zelle, die der Pico-Basisstation entspricht, umfasst, wobei die Makro-Basisstation und die Pico-Basisstation einen gleichen Träger verwenden, um jeweils mit der von der Makro-Basisstation bedienten Benutzerausrüstung (14) und der von der Pico-Basisstation bedienten Benutzerausrüstung zu kommunizieren, und wobei die Makro-Basisstation Folgendes umfasst:
eine Downlink-Kommunikationseinheit (11), die konfiguriert ist, um ein Signal an einen ersten Uplink-Zeitschlitz zu senden, der von der Makro-Basisstation verwendet wird; und
eine Uplink-Kommunikationseinheit (12), die konfiguriert ist, um ein Signal in einem ersten Uplink-Zeitschlitz zu empfangen, der von der Makro-Basisstation verwendet wird; und
wobei die Pico-Basisstation Folgendes umfasst:
eine Vollduplex-Kommunikationseinheit (21), die konfiguriert ist, um einen oder mehrere Signalsende- oder Signalempfangsvorgänge in einem ersten Vollduplex-Zeitschlitz durchzuführen, der von der Pico-Basisstation verwendet wird, wobei die Vollduplex-Kommunikation der Pico-Basisstation ermöglicht, gleichzeitige Sende- und Empfangsvorgänge auf einem gleichen Funkkanal durchzuführen;
eine Downlink-Kommunikationseinheit (22), die konfiguriert, um ein Signal an einen ersten Downlink-Zeitschlitz zu senden, der von der Pico-Basisstation verwendet wird; und
eine Uplink-Kommunikationseinheit (23), die konfiguriert ist, um ein Signal in einem ersten Uplink-Zeitschlitz zu empfangen, der von der Pico-Basisstation verwendet wird;
wobei ein Startpunkt und ein Endpunkt eines inaktiven Zeitschlitzes, der von der Makro-Basisstation verwendet wird, mit denen des ersten Vollduplex-Zeitschlitzes, der von der Pico-Basisstation verwendet wird, ausgerichtet sind, wobei ein Startpunkt eines ersten Downlink-Zeitschlitzes, der von der Makro-Basisstation verwendet wird, mit dem des ersten Downlink-Zeitschlitzes, der von der Pico-Basisstation verwendet wird, ausgerichtet ist, und ein Startpunkt und ein Endpunkt eines ersten Uplink-Zeitschlitzes, der von der Makro-Basisstation verwendet wird, mit denen des ersten Uplink-Zeitschlitzes, der von der Pico-Basisstation verwendet wird, ausgerichtet sind.

9. Drahtloses Kommunikationssystem nach Anspruch 8, wobei, wenn ein Wegverlust zwischen der Pico-Basisstation (13) und der Makro-Basisstation (12) kleiner oder gleich einem ersten Schwellenwert ist, die Uplink-Kommunikationseinheit (12) der Makro-Basisstation ferner konfiguriert ist, um ein Signal in einem zweiten Uplink-Zeitschlitz zu empfangen, der von der Makro-Basisstation verwendet wird; und
die Uplink-Kommunikationseinheit in der Makro-Basisstation ferner konfiguriert ist, um ein Signal in einem dritten Uplink-Zeitschlitz zu empfangen, der von der Makro-Basisstation verwendet wird;
wobei ein Startpunkt und ein Endpunkt des zweiten Uplink-Zeitschlitzes, der von der Makro-Basisstation verwendet wird, mit denen eines zweiten Uplink-Zeitschlitzes, der von der Pico-Basisstation verwendet wird, ausgerichtet sind, und ein Startpunkt und ein Endpunkt des dritten Uplink-Zeitschlitzes, der von der Makro-Basisstation verwendet wird, mit denen eines zweiten Vollduplex-Zeitschlitzes, der von der Pico-Basisstation verwendet wird, ausgerichtet sind.

10. Drahtloses Kommunikationssystem nach Anspruch 8, wobei, wenn ein Wegverlust zwischen der Pico-Basisstation (13) und der Makro-Basisstation (12) größer als ein erster Schwellenwert ist:
die Uplink-Kommunikationseinheit (12) in der Makro-Basisstation ferner konfiguriert ist, um ein Signal in einem zweiten Uplink-Zeitschlitz zu empfangen, der von der Makro-Basisstation verwendet wird; und
die Uplink-Kommunikationseinheit in der Makro-Basisstation ferner konfiguriert ist, um ein Signal in einem dritten Uplink-Zeitschlitz zu empfangen, der von der Makro-Basisstation verwendet wird;
wobei ein Startpunkt und ein Endpunkt des zweiten Uplink-Zeitschlitzes, der von der Makro-Basisstation verwendet wird, mit denen eines dritten Vollduplex-Zeitschlitzes, der von der Pico-Basisstation verwendet wird, ausgerichtet sind, und ein Startpunkt und ein Endpunkt des dritten Uplink-Zeitschlitzes, der von der Makro-Basisstation verwendet wird, mit denen eines zweiten Vollduplex-Zeitschlitzes, der von der Pico-Basisstation verwendet wird, ausgerichtet sind.

11. Drahtloses Kommunikationssystem nach Anspruch 8, wobei, wenn ein Wegverlust zwischen der Pico-Basisstation (13) und der Makro-Basisstation (12) kleiner oder gleich einem ersten Schwellenwert ist:
die Uplink-Kommunikationseinheit (23) in der Pico-Basisstation ferner konfiguriert ist, um ein Signal in einem zweiten Uplink-Zeitschlitz zu empfangen, der von der Pico-Basisstation verwendet wird; und
die Vollduplex-Kommunikationseinheit (23) in der Pico-Basisstation ferner konfiguriert ist, um einen oder mehrere Signalsende- oder Signalempfangsvorgänge in einem zweiten Vollduplex-Zeitschlitz durchzuführen, der von der Pico-Basisstation verwendet wird;
wobei ein Startpunkt und ein Endpunkt des zweiten Uplink-Zeitschlitzes, der von der Pico-Basisstation verwendet wird, mit denen eines zweiten Uplink-Zeitschlitzes, der von der Makro-Basisstation verwendet wird, ausgerichtet sind, und ein Startpunkt und ein Endpunkt des zweiten Vollduplex-Zeitschlitzes, der von der Pico-Basisstation verwendet wird, mit denen eines dritten Uplink-Zeitschlitzes, der von der Makro-Basisstation verwendet wird, ausgerichtet sind.

12. Drahtloses Kommunikationssystem nach Anspruch 8, wobei, wenn ein Wegverlust zwischen der Pico-Basisstation (13) und der Makro-Basisstation (12) größer als ein erster Schwellenwert ist:
die Vollduplex-Kommunikationseinheit (21) ferner konfiguriert ist, um einen oder mehrere Signalsende- oder Signalempfangsvorgänge in einem zweiten Vollduplex-Zeitschlitz durchzuführen, der von der Pico-Basisstation verwendet wird; und
die Vollduplex-Kommunikationseinheit ferner konfiguriert ist, um einen oder mehrere Signalsende- oder Signalempfangsvorgänge in einem dritten Vollduplex-Zeitschlitz durchzuführen, der von der Pico-Basisstation verwendet wird;
wobei ein Startpunkt und ein Endpunkt des dritten Vollduplex-Zeitschlitzes, der von der Pico-Basisstation verwendet wird, mit denen eines zweiten Uplink-Zeitschlitzes, daervon der Makro-Basisstation verwendet wird, ausgerichtet sind, und ein Startpunkt und ein Endpunkt des zweiten Vollduplex-Zeitschlitzes, der von der Pico-Basisstation verwendet wird, mit denen eines dritten Uplink-Zeitschlitzes, der von der Makro-Basisstation verwendet wird, ausgerichtet sind.

13. Drahtloses Kommunikationssystem nach Anspruch 8, ferner umfassend eine erste Benutzerausrüstung (14), die von der Makro-Basisstation (12) bedient wird, wobei die erste Benutzerausrüstung Folgendes umfasst:
eine Downlink-Kommunikationseinheit (31), die konfiguriert ist, um in einem ersten Downlink-Zeitschlitz, der von der ersten Benutzerausrüstung verwendet wird, ein Signal zu empfangen, das von der Makro-Basisstation gesendet wird; und
eine Uplink-Kommunikationseinheit (32), die konfiguriert ist, um ein Signal an die Makro-Basisstation in einem ersten Uplink-Zeitschlitz zu senden, der von der ersten Benutzerausrüstung verwendet wird;
wobei ein Startpunkt und ein Endpunkt eines inaktiven Zeitschlitzes, der von der ersten Benutzerausrüstung verwendet wird, mit denen des ersten Vollduplex-Zeitschlitzes, der von der Pico-Basisstation verwendet wird, ausgerichtet sind, wobei ein Startpunkt des ersten Downlink-Zeitschlitzes, der von der ersten Benutzerausrüstung verwendet wird, mit dem des ersten Downlink-Zeitschlitzes, der von der Pico-Basisstation verwendet wird, ausgerichtet ist, und wobei ein Startpunkt und ein Endpunkt des ersten Uplink-Zeitschlitzes, der von der ersten Benutzerausrüstung verwendet wird, mit denen des ersten Uplink-Zeitschlitzes, der von der Pico-Basisstation verwendet wird, ausgerichtet sind.

14. Drahtloses Kommunikationssystem nach Anspruch 8, ferner umfassend eine zweite Benutzerausrüstung (15), die von der Pico-Basisstation (13) bedient wird, wobei die zweite Benutzerausrüstung Folgendes umfasst:
eine Vollduplex-Kommunikationseinheit (41), die konfiguriert ist, um einen oder mehrere Signalsende- oder Signalempfangsvorgänge in einem ersten Vollduplex-Zeitschlitz durchzuführen, der von der zweiten Benutzerausrüstung verwendet wird;
eine Downlink-Kommunikationseinheit (42), die konfiguriert ist, um in einem ersten Downlink-Zeitschlitz, der von der zweiten Benutzerausrüstung verwendet wird, ein Signal zu empfangen, das von der Pico-Basisstation gesendet wird; und
eine Uplink-Kommunikationseinheit (43), die konfiguriert ist, um ein Signal an die Pico-Basisstation in einem ersten Uplink-Zeitschlitz zu senden, der von der zweiten Benutzerausrüstung verwendet wird;
wobei ein Startpunkt und ein Endpunkt des inaktiven Zeitschlitzes, der von der Makro-Basisstation verwendet wird, mit denen des ersten Vollduplex-Zeitschlitzes, der von der zweiten Benutzerausrüstung verwendet wird, ausgerichtet sind, wobei ein Startpunkt des ersten Downlink-Zeitschlitzes, der von der Makro-Basisstation verwendet wird, mit dem des ersten Downlink-Zeitschlitzes, der von der zweiten Benutzerausrüstung verwendet wird, ausgerichtet ist und wobei ein Startpunkt und ein Endpunkt des ersten Uplink-Zeitschlitzes, der von der Makro-Basisstation verwendet wird, mit denen des ersten Uplink-Zeitschlitzes, der von der zweiten Benutzerausrüstung verwendet wird, ausgerichtet sind.

## Revendications

1. Procédé de communication sans fil, appliqué à un système de communication sans fil dans lequel une macrocellule correspondant à une macrostation de base (12) comprend une petite cellule correspondant à une picostation de base (13), la macrostation de base et la picostation de base utilisant une même porteuse pour communiquer respectivement avec un équipement d'utilisateur (14) desservi par la macrostation de base et par l'équipement d'utilisateur desservi par la picostation de base, et le procédé comprenant :
l'envoi (S101), par la macrostation de base, d'un signal dans un premier intervalle de temps de liaison descendante utilisé par la macrostation de base ;
la réception (S102), par la macrostation de base, d'un signal dans un premier intervalle de temps de liaison montante utilisé par la macrostation de base ; et
le saut de l'envoi et de la réception, par la macrostation de base, d'un signal dans un intervalle de temps inactif utilisé par la macrostation de base ;
le procédé comprenant en outre :
la réalisation (S301), par la picostation de base, d'un ou de plusieurs de l'envoi de signaux ou de la réception de signaux dans le premier intervalle de temps en duplex intégral utilisé par la picostation de base, la communication en duplex intégral permettant à la picostation de base d'effectuer des opérations simultanées d'envoi et de réception sur un même canal radio ;
l'envoi (S302), par la picostation de base, d'un signal dans le premier intervalle de temps de liaison descendante utilisé par la picostation de base ; et
la réception (S303), par la picostation de base, d'un signal dans le premier intervalle de temps de liaison montante utilisé par la picostation de base ;
un point de départ et un point d'arrivée d'un intervalle de temps inactif utilisé par la macrostation de base étant alignés avec ceux du premier intervalle de temps en duplex intégral utilisé par la picostation de base, un point de départ d'un premier intervalle de temps de liaison descendante utilisé par la macrostation de base étant aligné avec celui du premier intervalle de temps de liaison descendante utilisé par la picostation de base, et un point de départ et un point d'arrivée d'un premier intervalle de temps de liaison montante utilisé par la macrostation de base étant alignés avec ceux du premier intervalle de temps de liaison montante utilisé par la picostation de base.

2. Procédé selon la revendication 1, dans lequel quand un affaiblissement de propagation entre la picostation de base (13) et la macrostation de base (12) est inférieur ou égal à un premier seuil, le procédé comprend en outre :
la réception, par la macrostation de base, d'un signal dans un deuxième intervalle de temps de liaison montante utilisé par la macrostation de base ; et
la réception, par la macrostation de base, d'un signal dans un troisième intervalle de temps de liaison montante utilisé par la macrostation de base;
un point de départ et un point d'arrivée du deuxième intervalle de temps de liaison montante utilisé par la macrostation de base étant alignés avec ceux d'un deuxième intervalle de temps de liaison montante utilisé par la picostation de base, et un point de départ et un point d'arrivée du troisième intervalle de temps de liaison montante utilisé par la macrostation de base étant alignés avec ceux d'un deuxième intervalle de temps en duplex intégral utilisé par la picostation de base.

3. Procédé selon la revendication 1, dans lequel quand un affaiblissement de propagation entre la picostation de base (13) et la macrostation de base (12) dépasse un premier seuil, le procédé comprend en outre :
la réception, par la macrostation de base, d'un signal dans un deuxième intervalle de temps de liaison montante utilisé par la macrostation de base ; et
la réception, par la macrostation de base, d'un signal dans un troisième intervalle de temps de liaison montante utilisé par la macrostation de base ;
un point de départ et un point d'arrivée du deuxième intervalle de temps de liaison montante utilisé par la macrostation de base étant alignés avec ceux d'un troisième intervalle de temps en duplex intégral utilisé par la picostation de base, et un point de départ et un point d'arrivée du troisième intervalle de temps de liaison montante utilisé par la macrostation de base étant alignés avec ceux d'un deuxième intervalle de temps en duplex intégral utilisé par la picostation de base.

4. Procédé selon la revendication 1, dans lequel quand un affaiblissement de propagation entre la picostation de base (13) et la macrostation de base (12) est inférieur ou égal à un premier seuil, le procédé comprend en outre :
la réception, par la picostation de base, d'un signal dans un deuxième intervalle de temps de liaison montante utilisé par la picostation de base ; et
la réalisation, par la picostation de base, d'au moins l'un de l'envoi de signaux ou de la réception de signaux dans un deuxième intervalle de temps en duplex intégral utilisé par la picostation de base ;
un point de départ et un point d'arrivée du deuxième intervalle de temps de liaison montante utilisé par la picostation de base étant alignés avec ceux d'un deuxième intervalle de temps de liaison montante utilisé par la macrostation de base, et un point de départ et un point d'arrivée du deuxième intervalle de temps en duplex intégral utilisé par la picostation de base étant alignés avec ceux d'un troisième intervalle de temps de liaison montante utilisé par la macrostation de base.

5. Procédé selon la revendication 1, dans lequel quand un affaiblissement de propagation entre la picostation de base (13) et la macrostation de base (12) dépasse un premier seuil, le procédé comprend en outre:
la réalisation, par la picostation de base, d'au moins l'un de l'envoi de signaux ou de la réception de signaux dans un deuxième intervalle de temps en duplex intégral utilisé par la picostation de base ; et
la réalisation, par la picostation de base, d'au moins l'un de l'envoi de signaux ou de la réception de signaux dans un troisième intervalle de temps en duplex intégral utilisé par la picostation de base ;
un point de départ et un point d'arrivée du troisième intervalle de temps en duplex intégral utilisé par la picostation de base étant alignés avec ceux d'un deuxième intervalle de temps de liaison montante utilisé par la macrostation de base, et un point de départ et un point d'arrivée du deuxième intervalle de temps en duplex intégral utilisé par la picostation de base étant alignés avec ceux d'un troisième intervalle de temps de liaison montante utilisé par la macrostation de base.

6. Procédé selon la revendication 1, dans lequel le procédé comprend en outre :
la réception, par un premier équipement d'utilisateur (14) dans un premier intervalle de temps de liaison descendante utilisé par le premier équipement d'utilisateur, d'un signal envoyé par la macrostation de base (12) ; et
l'envoi, par le premier équipement d'utilisateur, d'un signal à la macrostation de base dans un premier intervalle de temps de liaison montante utilisé par le premier équipement d'utilisateur ;
un point de départ et un point d'arrivée d'un intervalle de temps inactif utilisé par le premier équipement d'utilisateur étant alignés avec ceux du premier intervalle de temps en duplex intégral utilisé par la picostation de base, un point de départ du premier intervalle de temps de liaison descendante utilisé par le premier équipement d'utilisateur étant aligné avec celui du premier intervalle de temps de liaison descendante utilisé par la picostation de base (13), un point de départ et un point d'arrivée du premier intervalle de temps de liaison montante utilisé par le premier équipement d'utilisateur étant alignés avec ceux du premier intervalle de temps de liaison montante utilisé par la picostation de base, et le premier équipement d'utilisateur étant un équipement d'utilisateur desservi par la macrostation de base.

7. Procédé selon la revendication 1, dans lequel le procédé comprend en outre :
la réalisation (S401), par un second équipement d'utilisateur (15), d'au moins l'un de l'envoi de signaux ou de la réception de signaux dans un premier intervalle de temps en duplex intégral utilisé par le second équipement d'utilisateur ;
la réception (S402), par le second équipement d'utilisateur dans un premier intervalle de temps de liaison descendante utilisé par le second équipement d'utilisateur, d'un signal envoyé par la picostation de base (13) ; et
l'envoi (S403), par le second équipement d'utilisateur, d'un signal à la picostation de base dans un premier intervalle de temps de liaison montante utilisé par le second équipement d'utilisateur;
un point de départ et un point d'arrivée du premier intervalle de temps inactif utilisé par la macrostation de base (12) étant alignés avec ceux du premier intervalle de temps en duplex intégral utilisé par le second équipement d'utilisateur, un point de départ du premier intervalle de temps de liaison descendante utilisé par la macrostation de base étant aligné avec celui du premier intervalle de temps de liaison descendante utilisé par le second équipement d'utilisateur, un point de départ et un point d'arrivée du premier intervalle de temps de liaison montante utilisé par la macrostation de base étant alignés avec ceux du premier intervalle de temps de liaison montante utilisé par le second équipement d'utilisateur, et le second équipement d'utilisateur est un équipement d'utilisateur desservi par la picostation de base.

8. Système de communication sans fil comprenant une macrostation de base (12) et une picostation de base (13), une macrocellule correspondant à la macrostation de base comprenant une petite cellule correspondant à la picostation de base, la macrostation de base et la picostation de base utilisant une même porteuse pour communiquer respectivement avec un équipement d'utilisateur (14) desservi par la macrostation de base et avec un équipement d'utilisateur desservi par la picostation de base, et la macrostation de base comprenant :
une unité de communication de liaison descendante (11), configurée pour envoyer un signal dans un premier intervalle de temps de liaison descendante utilisé par la macrostation de base ; et
une unité de communication de liaison montante (12), configurée pour recevoir un signal dans un premier intervalle de temps de liaison montante utilisé par la macrostation de base ; et
la picostation de base comprenant :
une unité de communication en duplex intégral (21), configurée pour effectuer au moins l'un de l'envoi de signaux ou de la réception de signaux dans un premier intervalle de temps en duplex intégral utilisé par la picostation de base, la communication en duplex intégral permettant à la picostation de base d'effectuer des opérations simultanées d'envoi et de réception sur un même canal radio ;
une unité de communication de liaison descendante (22), configurée pour envoyer un signal dans un premier intervalle de temps de liaison descendante utilisé par la picostation de base ; et
une unité de communication de liaison montante (23), configurée pour recevoir un signal dans un premier intervalle de temps de liaison montante utilisé par la picostation de base ;
un point de départ et un point d'arrivée d'un intervalle de temps inactif utilisé par la macrostation de base étant alignés avec ceux du premier intervalle de temps en duplex intégral utilisé par la picostation de base, un point de départ d'un premier intervalle de temps de liaison descendante utilisé par la macrostation de base étant aligné avec celui du premier intervalle de temps de liaison descendante utilisé par la picostation de base, et un point de départ et un point d'arrivée d'un premier intervalle de temps de liaison montante utilisé par la macrostation de base étant alignés avec ceux du premier intervalle de temps de liaison montante utilisé par la picostation de base.

9. Système de communication sans fil selon la revendication 8, dans lequel quand un affaiblissement de propagation entre la picostation de base (13) et la macrostation de base (12) est inférieur ou égal à un premier seuil, l'unité de communication de liaison montante (12) de la macrostation de base est en outre configurée pour recevoir un signal dans un deuxième intervalle de temps de liaison montante utilisé par la macrostation de base ; et
l'unité de communication de liaison montante de la macrostation de base est en outre configurée pour recevoir un signal dans un troisième intervalle de temps de liaison montante utilisé par la macrostation de base ;
un point de départ et un point d'arrivée du deuxième intervalle de temps de liaison montante utilisé par la macrostation de base étant alignés avec ceux d'un deuxième intervalle de temps de liaison montante utilisé par la picostation de base, et un point de départ et un point d'arrivée du troisième intervalle de temps de liaison montante utilisé par la macrostation de base étant alignés avec ceux d'un deuxième intervalle de temps en duplex intégral utilisé par la picostation de base.

10. Système de communication sans fil selon la revendication 8, dans lequel quand un affaiblissement de propagation entre la picostation de base (13) et la macrostation de base (12) dépasse un premier seuil :
l'unité de communication de liaison montante (12) de la macrostation de base est en outre configurée pour recevoir un signal dans un deuxième intervalle de temps de liaison montante utilisé par la macrostation de base ; et
l'unité de communication de liaison montante de la macrostation de base est en outre configurée pour recevoir un signal dans un troisième intervalle de temps de liaison montante utilisé par la macrostation de base ;
un point de départ et un point d'arrivée du deuxième intervalle de temps de liaison montante utilisé par la macrostation de base étant alignés avec ceux d'un troisième intervalle de temps en duplex intégral utilisé par la picostation de base, et un point de départ et un point d'arrivée du troisième intervalle de temps de liaison montante utilisé par la macrostation de base étant alignés avec ceux d'un deuxième intervalle de temps en duplex intégral utilisé par la picostation de base.

11. Système de communication sans fil selon la revendication 8, dans lequel quand un affaiblissement de propagation entre la picostation de base (13) et la macrostation de base (12) est inférieur ou égal à un premier seuil :
l'unité de communication de liaison montante (23) de la picostation de base est en outre configurée pour recevoir un signal dans un deuxième intervalle de temps de liaison montante utilisé par la picostation de base ; et
l'unité de communication en duplex intégral (23) de la picostation de base est en outre configurée pour effectuer au moins l'un de l'envoi de signaux ou de la réception de signaux dans un deuxième intervalle de temps en duplex intégral utilisé par la picostation de base ;
un point de départ et un point d'arrivée du deuxième intervalle de temps de liaison montante utilisé par la picostation de base étant alignés avec ceux d'un deuxième intervalle de temps de liaison montante utilisé par la macrostation de base, et un point de départ et un point d'arrivée du deuxième intervalle de temps en duplex intégral utilisé par la picostation de base étant alignés avec ceux d'un troisième intervalle de temps de liaison montante utilisé par la macrostation de base.

12. Système de communication sans fil selon la revendication 8, dans lequel quand un affaiblissement de propagation entre la picostation de base (13) et la macrostation de base (12) dépasse un premier seuil :
l'unité de communication en duplex intégral (21) est en outre configurée pour effectuer au moins l'un de l'envoi de signaux ou de la réception de signaux dans un deuxième intervalle de temps en duplex intégral utilisé par la picostation de base ; et
l'unité de communication en duplex intégral est en outre configurée pour effectuer au moins l'un de l'envoi de signaux ou de la réception de signaux dans un troisième intervalle de temps en duplex intégral utilisé par la picostation de base ;
un point de départ et un point d'arrivée du troisième intervalle de temps en duplex intégral utilisé par la picostation de base étant alignés avec ceux d'un deuxième intervalle de temps de liaison montante utilisé par la macrostation de base, et un point de départ et un point d'arrivée du deuxième intervalle de temps en duplex intégral utilisé par la picostation de base étant alignés avec ceux d'un troisième intervalle de temps de liaison montante utilisé par la macrostation de base.

13. Système de communication sans fil selon la revendication 8 comprenant en outre un premier équipement d'utilisateur (14) desservi par la macrostation de base (12), le premier équipement d'utilisateur comprenant :
une unité de communication de liaison descendante (31), configurée pour recevoir, dans un premier intervalle de temps de liaison descendante utilisé par le premier équipement d'utilisateur, un signal envoyé par la macrostation de base ; et
une unité de communication de liaison montante (32), configurée pour envoyer un signal à la macrostation de base dans un premier intervalle de temps de liaison montante utilisé par le premier équipement d'utilisateur ;
un point de départ et un point d'arrivée d'un intervalle de temps inactif utilisé par le premier équipement d'utilisateur étant alignés avec ceux du premier intervalle de temps en duplex intégral utilisé par la picostation de base, un point de départ du premier intervalle de temps de liaison descendante utilisé par le premier équipement d'utilisateur étant aligné avec celui du premier intervalle de temps de liaison descendante utilisé par la picostation de base, et un point de départ et un point d'arrivée du premier intervalle de temps de liaison montante utilisé par le premier équipement d'utilisateur étant alignés avec ceux du premier intervalle de temps de liaison montante utilisé par la picostation de base.

14. Système de communication sans fil selon la revendication 8, comprenant en outre un second équipement d'utilisateur (15) desservi par la picostation de base (13), le second équipement d'utilisateur comprenant :
une unité de communication en duplex intégral (41), configurée pour effectuer au moins l'un de l'envoi de signaux ou de la réception de signaux dans un premier intervalle de temps en duplex intégral utilisé par le second équipement d'utilisateur ;
une unité de communication de liaison descendante (42), configurée pour recevoir, dans un premier intervalle de temps de liaison descendante utilisé par le second équipement d'utilisateur, un signal envoyé par la picostation de base ; et
une unité de communication de liaison montante (43), configurée pour envoyer un signal à la picostation de base dans un premier intervalle de temps de liaison montante utilisé par le second équipement d'utilisateur ;
un point de départ et un point d'arrivée du premier intervalle de temps utilisé par la macrostation de base étant alignés avec ceux du premier intervalle de temps en duplex intégral utilisé par le second équipement d'utilisateur, un point de départ du premier intervalle de temps de liaison descendante utilisé par la macrostation de base étant aligné avec celui du premier intervalle de temps de liaison descendante utilisé par le second équipement d'utilisateur, et un point de départ et un point d'arrivée du premier intervalle de temps de liaison montante utilisé par la macrostation de base étant alignés avec ceux du premier intervalle de temps de liaison montante utilisé par le second équipement d'utilisateur.
